(19) Europäisches Patentamt
European Patent Office
Office européen des brevets

(11) EP 1 096 407 A1

# (12) EUROPEAN PATENT APPLICATION

(43) Date of publication:
**02.05.2001 Bulletin 2001/18**

(51) Int. Cl.[7]: **G06F 17/60**

(21) Application number: **00309370.5**

(22) Date of filing: **24.10.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **25.10.1999 GB 9925197**
**04.05.2000 US 564981**

(71) Applicant: **Vanco Group Limited**
**Isleworth, Middlesex TW7 5AX (GB)**

(72) Inventor: **Timpany, Edward Allen**
**Hartley Wintney, Hampshire RG27 8LT (GB)**

(74) Representative:
**Faulkner, Thomas John et al**
**fJ Cleveland,**
**40-43 Chancery Lane**
**London WC2A 1JQ (GB)**

## (54) Using communications networks for recruitment advertising

(57) A method of using a computer communications network for recruitment advertising. A database, concerning job vacancies is kept, each vacancy file contains information concerning a job vacancy, one or more candidate suitability requirement for that vacancy and details of a payment to be made upon submission of a suitable curriculum vitae. Information in the vacancy files is made available in advertisements accessible via a network. Candidates view the advertisements and input relevant information concerning themselves via the network. At a server the details of candidates received is compared with the requirements specified in the vacancy files, and subsequent operations of the system are controlled in dependence on the results of said comparison.

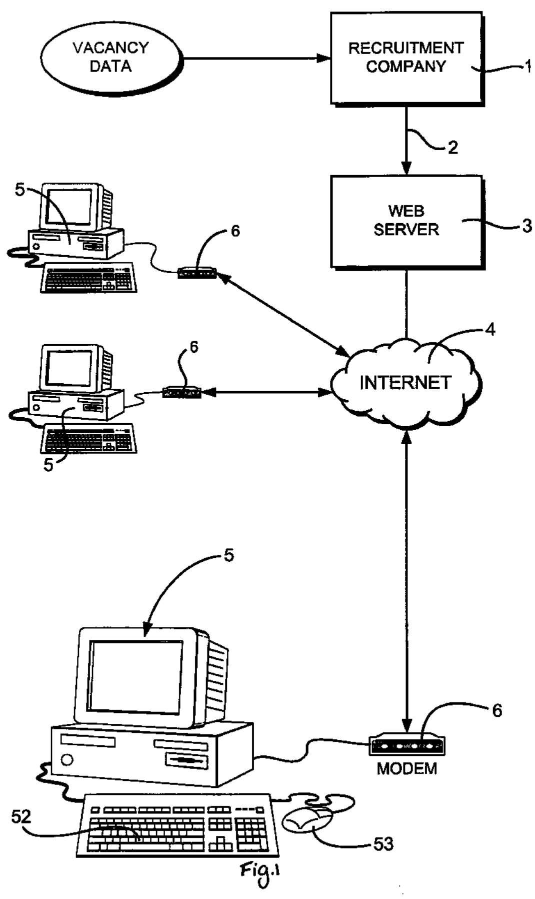


Fig.1

EP 1 096 407 A1

## Description

This invention relates to recruitment advertising and jobseeking, in particular methods, apparatus and computer program products stored on computer readable media for using communications networks for recruitment advertising.

In general recruitment consultants need a continual stream of new candidates in order to be in a position to put forward suitable candidates for vacancies which their clients have. Whilst there is a general need to have an influx of candidates it is particularly desirable if that influx consists mainly of candidates having suitable skills and attributes for the vacancies which the recruitment consultants currently have a need to fill.

It is an object of the present invention to provide a mechanism for recruitment advertising which is particularly suitable for use by recruitment consultants, which can reach a large number of people, and which can encourage applications from candidates having skills and attributes suited to job vacancies which are currently available.

According to a first aspect of the present invention there is provided apparatus for using a communications network for recruitment advertising comprising

database means for storing files concerning a plurality of job vacancies, wherein each vacancy file comprises information concerning a job vacancy and one or more candidate suitability requirement for that vacancy,
means for making information in said vacancy files available as advertisements via the communications network,
means for receiving candidate specific data from candidates via the communications network,
means for comparing received candidate specific data with the requirements specified in said files, and
means for controlling subsequent operations in dependence on the results of said comparison.

Typically the apparatus comprises one or more computer arranged under the control of appropriate software to provide the necessary means for operation.

According to a second aspect of the present invention there is provided a method of using a computer communications network for recruitment advertising comprising the steps of

storing files concerning a plurality of job vacancies in database means, wherein each vacancy file comprises information concerning a job vacancy and one or more candidate suitability requirement for that vacancy,
making information in said vacancy files available as advertisements via the communications network,
receiving candidate specific data from candidates via the communications network,
comparing received candidate specific data with the requirements specified in said files, and
controlling subsequent operations in dependence on the results of said comparison.

Such arrangements make advertisements available to a wide selection of people, allow the advertisements to be tailored to particular requirements and allow for further actions to be instigated in response to the receipt of information concerning suitable/non-suitable candidates.

In this specification the meaning of advertisement includes any text, picture or the like containing information about a vacancy which is available and/or details of skills and/or attributes which are of interest.

The communications network will typically comprise the internet and more particularly the World Wide Web. The database means, or at least a part thereof, may be provided at or accessible via a webserver. Information concerning job vacancies may be obtainable by a user, for example a candidate, using a conventional browser to view advertisements on a website at the webserver. Similarly, a candidate may provide candidate specific data via the website.

Typically the website will be administered by or on behalf of a recruitment organisation. The database means may comprise a web site database provided at the web server and main database provided at a computer system distinct from the web server, for example at a recruitment organisation's computer system. The main database may comprise a conventional recruitment database such as "Voyager". A communications link may be provided between the webserver and the distinct computer system to allow data concerning job vacancies to be uploaded from the main database to the website database.

In preferred embodiments each vacancy file includes details of a payment which will be made to a candidate when predetermined conditions are met. The predetermined conditions will typically include the submission of suitable candidate specific information. The means for controlling subsequent operations may be arranged to authorise making of a payment only when the comparison made by the comparing means shows that a candidate has submitted predetermined candidate specific information. The payment may be effected automatically, for example by electronic means, once the predetermined conditions are met. The predetermined conditions may include the submission of a candidate's Curriculum Vitae. Means may be provided for the sending and receiving of the candidate's Curriculum Vitae in electronic format over the communications network. Means may be provided for the candidate's Curriculum Vitae to be automatically incorporated into an electronic mail message to a predetermined address once the file details of the Curriculum Vitae are entered by a user. Typically the value of payment available in association with a vacancy and/or a particular set of skills and/or attributes is displayed as part of the respective advertisement.

The ability to offer payment to suitable candidates can serve to increase the number of suitable candidates compared to a more generic advertising system. Further, it is possible to select the level of payments for different vacancies, skills, attributes etc.

The means for controlling subsequent operations may be arranged so that the advertisements which are displayed and/or their content changes dynamically in response to the results of the comparison made by the comparing means.

The apparatus may be arranged under the control of software so that the value of payment associated with a vacancy/set of skills and/or attributes varies in dependence on the occurrence of predetermined events. The value of payment may vary with the number of candidates who respond to the corresponding advertisement. The value of payment may vary in dependence on the candidate specific data of candidates who have already responded to the corresponding advertisement.

The means for making information in said vacancy files available as an advertisement may comprise means for automatically extracting selected elements from vacancy files for inclusion in the respective advertisement. Where advertisements form part of a Webpage each advertisement may comprise a HyperText link to a page containing more detailed information.

The system may be arranged so that once a respective vacancy no longer exists and/or a preselected number of applications has been reached any advertisement for that vacancy will be automatically removed.

The system may be arranged so that on visiting the website a user may select appropriate candidate specific information for submission from a series of drop down menus. The system may be arranged so that the contents of the drop down menus is dynamically linked to the database means and may be arranged to show candidate specific information of current interest, that is, candidate specific information that matches the requirements in one or more vacancy file.

Thus the system may be such that the content of the drop down menus changes in accordance with the vacancies available.

The system may be arranged to conduct a search of the vacancy files stored in the database means on the basis of the candidate specific information selected from the drop down menus.

According to a third aspect of the present invention there is provided a computer program product embodied on a computer readable medium comprising software code portions for performing the steps of the second aspect of the present invention when run on computer means.

According to a fourth aspect of the present invention there is provided a computer program product embodied on a computer readable medium comprising software code portions which when run on computer means provide the apparatus defined the first aspect of the invention.

According to a fifth aspect of the present invention there is provided a computer program product for recruitment advertising using a communications network, embodied on a computer readable medium comprising

computer readable program code means for causing computer means to implement database means for storing files concerning a plurality of job vacancies, wherein each vacancy file comprises information concerning a job vacancy and one or more candidate suitability requirement for that vacancy,
computer readable program code means for causing the computer means to make information in said vacancy files available as advertisements via the communications network,
computer readable program code means for allowing the computer means to receive candidate specific data from candidates via the communications network,
computer readable program code means for causing the computer means to compare received candidate specific data with the requirements specified in said files, and
computer readable program code means for causing the computer means to control subsequent operations in dependence on the results of said comparison.

Embodiments of the present invention will now be described, by way of example only, with reference to the accompanying drawings in which:

Figure 1 shows a user's computer connected via the internet to a system for recruitment advertising;

Figure 2 schematically shows a system for recruitment advertising;

Figures 3A to 3C show a flow chart setting out a process used in operation of the recruitment advertising system shown in Figures 1 and 2;

Figures 4A to 4K show a series of screens which are displayed to a candidate when using a website embodying the invention and when a CV is to be accepted;

Figures 5A and 5B show two screens which will be seen by a candidate when their CV is not desired; and

Figure 6 shows a screen which is displayed if a candidate's CV has already been submitted.

Figure 1 schematically shows hardware used to implement a system for recruitment advertising using a communications network. The system is typically administered by or on behalf of a recruitment company which will have its own computer system 1 at which will be provided a main recruitment orientated database such as "Voyager" TM. The recruitment company's computer system 1 will be arranged to allow input of vacancy data concerning vacancies which the recruitment company is currently trying to fill. Vacancy data may be received for example by electronic mail (e-mail) or 'phone. The recruitment company's computer system 1 is connected via a dedicated e-mail link 2 to a webserver 3 which is interconnected with the internet 4. The webserver 3 is used to support a website for the posting of recruitment advertisements which can be viewed by a user and to allow a user to input personal information (candidate specific data) with a view to applying for one of the vacancies advertised on the site.

Typically a user will use a personal computer 5 connected via a modem 6 to the internet 4 in order to access the website provided at the webserver 3. However, any available means may be used to log onto the web such as Television based systems or a Universal Mobile Telecommunications system. Figure 1 shows three user systems 5, 6, one of these being shown in greater detail than the remainder. Whilst three user systems are illustrated in Figure 1, in practice the number of potential users is effectively limitless. The user's computer system 5 will typically be an entirely conventional Personal Computer (PC) comprising a display screen 51, a keyboard 52 and a mouse or other similar pointing device 53 which may be manipulated in a conventional way in conjunction with an internet browser, for example Internet Explorer TM or Netscape Navigator TM to view and interact with the recruitment advertising website provided at the webserver 3 via the internet 4. The recruitment advertising website is arranged to function in a standard way so that only conventional and generic software need be provided at the user's computer system 5 to allow use of the site. Therefore, the operations within the user's computer 5 and the connections between the user's computer 5 and the webserver are in general terms conventional and no further description is given herein.

Figure 2 shows the recruitment advertising system and its operation in more detail. The webserver 3 comprises a backend database which is arranged to interact with the conventional recruitment database provided at the recruitment company's computer system 1 via the communications link 2. Thus the internet webserver 3 and the recruitment company's computer system 1 as a whole, under the control of appropriate software, provides a database means for storing files concerning a plurality of job vacancies. Further suitable software is provided at the webserver 3 for selecting information from the vacancy files and making this information available as advertisements on the website. The webserver 3 under the control of appropriate software also allows users, in particular potential candidates, to input personal information, (candidates specific data) via their computer systems 5 and the internet 4. Moreover, the webserver 3 is arranged under appropriate software to compare incoming candidates specific data with requirements specified in the vacancy files in the database means and to control subsequent operations in dependence on the results of the comparison.

As illustrated in Figure 2 the backend database at the webserver 3 holds vacancy files 31 concerning a plurality of job vacancies. Details of the vacancies for the vacancy files 31 are uploaded by the recruitment company from its computer system 1 via the communications link 2 having been first received from clients, for example via e-mail or telephone. Each vacancy file 31 comprises information concerning a job vacancy such as a job description, the location of the vacancy and the salary being offered as well as one or more candidates suitability requirements such as the skills which are required for the job, the academic qualifications required, the salary level sought, the candidate's availability for work and the candidate's flexibility as far as work location is concerned. As will be explained in more detail below, candidates can view details of vacancies and/or details of particular skills and attributes sought and can apply for jobs using the system. Depending on their suitability, a candidate may be added to a client vacancy shortlist 32. Each client vacancy shortlist 32 is only accessible by a particular client and consists of shortlists of candidates having certain skills and attributes which that client is seeking to fill a particular vacancy. A plurality of candidate vacancy shortlists 33 are also provided at the webserver 3. Each candidate shortlist 33 is accessible only by the candidate concerned and consists of a list of vacancies for which the candidate is potentially suitable. As will be described in more detail below, if a client, when browsing his/her client vacancy shortlist 32, identifies a candidate in which he/she is interested, the client can indicate his interest via the website at which time the client's interest is acted upon to update the corresponding candidate shortlist 33 so that the candidate is aware of the client's interest.

A particularly important aspect of the present embodiment is that, for each advertisement for a particular vacancy or particular skills and attributes sought viewable at the website, a certain value is displayed which indicates a payment which will be made to a candidate who is determined by the system to be suitable and who responds to that advertisement by supplying his/her Curriculum Vitae (CV). The amount displayed for a particular vacancy or particular skills and attributes sought will depend on the demand for and supply of such candidates. Moreover the amount can be varied in accordance to the number of replies which have been received to a particular advertisement. For example an advertisement may be posted for candidates having skills X and Y and offering a payment of £100 per accepted CV. However, once the system has recorded receipt of, for example, 10 CV'S the advertised value for subsequent CV'S could be automatically reduced to, for example, £75.

Further, once a desired number of CV'S have been received then the respective advertisement is automatically removed from the website. In another example the payment offered may vary in dependence on the quality of the candidates who have already responded to the respective advertisement. In such a case, if say, 10 candidates exactly matching the criteria required have responded then the payment offered can be reduced even though 10 partial matches would not have caused such a reduction.

It will be appreciated that advertisements may be placed for particular skills and attributes which are required for more than one vacancy and the price per CV may depend on the number of those vacancies which have been successfully filled. Further, the number of CV's required, the number of CV's received at which the price changes, and the changes in price can be selected for each advertisement.

The following describes one possible method for determining the value of a payment that should be made to a candidate.

In this method each vacancy has an intrinsic maximum payment that can be made and the actual value of the payment at any moment in time depends on the number of suitable CVs that have been received.

The maximum available payment for a vacancy, PMAX is determined by the following equation:

$$PMAX = K \times (1+((R-1)/2)) \times (1+((S-1)/2)),$$

where K is a constant amount setting the overall range of payment, R is a rarity of skills value associated with the vacancy and is a S salary band constant associated with the vacancy. K might typically be set at a value of $200 and in the present embodiment R and S can each take a value of 1, 2, or 3.

It will be appreciated that PMAX can be set in different ways in alternative methods. For example, a value for PMAX might be chosen specifically by an administrator for each vacancy individually, in groups or collectively.

The actual payment to be made at any given time, PPAY, is calculated from PMAX in accordance with the following equation:

$$PPAY = PMAX \times (1 - [0.8 \times (NA/(NP \times C))]),$$

where NA is the number of applicants who matched the vacancy and submitted a CV, NP is the number of positions to be filled associated with the vacancy and C is the CV cover, ie the number of CVs required per position vacant. From the above it is clear that each vacancy may in fact represent a number of vacant positions, that is to say an employer may advertise a job and in fact have say 5 or 10 essentially identical vacant positions.

Payments are made in respect of a particular vacancy until sufficient CVs have been received, this may be expressed as follows: Payments made while $NA<(NP \times C)$.

The system and its operation will now be described in more detail with particular reference to the flow chart shown in Figures 3A to 3C.

In step 1 a full description of one or more vacancies is uploaded from the recruitment company's computer system 1 to the webserver database provided at the webserver 3. Under the control of software the webserver 3 then automatically extracts information from the corresponding vacancy files to produce a suitable advertisements in a moving display on a page of the website. The information which is automatically extracted comprises a very short description of the skills required and the payment currently being offered for the acceptance of a suitable CV.

In step 2 a visitor to the site who is a potential candidate, is directed to a webpage which asks them to fill in certain details about themselves, i.e. candidate specific data. Examples of information that may be requested are particular skills possessed, existing occupation (e.g. by selecting a nearest job title from a list given), desired occupations, levels of experience and academic qualifications, the salary which they are looking for, location in which they wish to work and their availability for work. Each of these pieces of information is entered by the user operating his keyboard 52 or mouse 53 to select from choices in drop down menus provided on the webpage. The possible selections from the drop down menus are determined in accordance with the vacancies which are currently held in the webserver database. Thus amongst other things it is possible to select types of skill and attributes which are currently required. Thus, if a candidate visits the site and does not have any of the necessary skills or experience included in the dropdown menus at that time the candidate may decide need not proceed with the remainder of the operation.

In step 3, under the control of suitable software, the webserver 3 performs a comparison between the candidate specific information entered by the candidate and the skills and attribute requirements of all the vacancies present in the server database. The subsequent operation of the system depends on the results of the comparison.

If there is no match then the process skips to step 8 in which a message is displayed on the user's display 51, offering an option to the user to send in a CV even though no payment will be received. If this option is refused then the program is exited and the process ceases. If, on the other hand, the user decides to send in a CV then the process returns to step 6 as described in detail further below.

When in step 3 it is determined that there is a skills and attributes match, step 4 is carried out in which the system checks whether there was one or more matches and if there were was more than one match the system identifies the match with the highest payment value and sends a display to the user in step 5 showing the payment which will be made if the CV is submitted and subsequently accepted.

At step 6 the system gives the candidate the option to send additional personal details and attach a CV. If this option is refused the program is exited, but if this option is taken up, the user enters the location of a file containing his CV and e-mail is automatically generated by the system and is sent with the CV as an attachment to a predetermined address for subsequent use by the recruitment company and client or clients whose vacancies have been selected. In alternatives, means other than e-mail may be used to send a candidate's CV for example FTP (File transfer protocol).

In step 7 it is determined whether the CV was requested as a result of a match being found in step 3 or as the result of a user deciding to send a CV in step 8. If the CV is not being sent as the result of a skills match, at step 9, the system displays a message on the user's display 51, that his/her details will be added to the recruitment company's database and checked against any other vacancies which were not included on the webserver database or which become available in the future. The program then exits.

On the other hand if, in step 7, it is determined that the CV was sent as the result of a skills match found in step 3, a message is displayed, at step 10, on the user's display 51 confirming that, subject to validation, a payment of £X will be made, £X being the highest payment available for the matches found for that candidate.

There are a number of different ways in which it is envisaged to make payments to candidates. One option is to collect credit card and/or bank details from each candidate during their operation of the site and then make automatic payments to the candidates once all the necessary conditions have been met. However, it is also possible to use the system described in this application to determine that a payment should be due and begin the authorisation process for making the payment but stop short of making the payment. In such a case further checks on the candidate can be made, perhaps by a recruitment consultant, and payments may be made manually, for example by cheque. This manual approach is preferable in at least some circumstances.

Next at step 11 the system displays on the user's display 51 a list of companies which may be interested in that candidate. It is to be noted that this list will contain a number of companies which have vacancies matching the candidate's skills and attributes but also a number of companies with whom there are no current vacancies to ensure that sensitive information concerning the recruitment needs of any particular company is not divulged.

At step 12 the candidate is given the option of identifying companies to whom he does not want his CV sent by marking as tick box shown on the display. The user then submits his/her request and at step 13 the companies rejected by means of the tick boxes are excluded.

The system next, in step 14, determines whether any of the matched vacancies is an exclusive vacancy. An exclusive vacancy is a vacancy where the client has indicated that it will only receive CV's from prospective candidates on the basis that the CV will not be sent to any other clients until the candidate rejects the vacancy or the client rejects the candidate. All other vacancies are termed general vacancies where the client accepts that any CV supplied to it may also be Supplied to other clients.

If there were no exclusive vacancies then at step 15 all appropriate client shortlists 32 (see Figure 2) are updated with details of the candidate so that clients can view their respective shortlists 32 and determine whether they are interested in that particular candidate. If, on the other hand, one of the matched vacancies is an exclusive vacancy, then at step 16, the candidate is added only to the corresponding client shortlist 32. However, if there is more than one exclusive vacancy match, then the candidate is added to the client shortlist 32, whose vacancy has the highest associated CV payment. At this stage the candidate may be interviewed by a recruitment consultant and details on the CV verified.

If the checks are satisfactory then payment will be authorised. However, if a candidate fails the checks that candidate will be removed from all shortlists. If it is deemed appropriate any such candidate may be added to a black list.

At step 17, once the verification process has been carried out, the respective clients have the option to request the CV of candidates whose names appear on their respective client shortlist 32. The webpage or pages showing the client shortlists 32 include a status box for each candidate which enables a client to manage applications. The candidate's status box is populated from a list of different status options. Some of these options may be selected by the client and others are automatically generated by the system. Below is a list of the status options for the client shortlist status box together with a brief explanation in each case.

"New candidate"
Appears when a candidate is first added to a shortlist
"Reject candidate, not suitable"
Can be applied by a client at any stage of the process
"Rejected vacancy, not suitable"
Autoupdates if applicant rejects at any stage of the process
"CV requested"
Used by client to confirm interest in candidate, and origin of candidate
"CV sent"
Autoupdates once CV sent
"Request candidate interest"
Autoupdates candidate vacancy list by adding the vacancy to candidate shortlist.
"Candidate interest confirmed"
Autoupdates when candidate confirms interest from candidate shortlist
"Request interview"
Client request, with details
"Interview confirmed"
Autoupdates once candidate confirms
"Client interview amend"
Client can revisit interview module to re-arrange interview
"Interview cancel, vacancy filled"
Autoupdates where candidate status = Interview confirmed, generated where status of another applicant = appointment confirmed and number of vacancies = zero.
"Candidate interview amend"
Autoupdates if candidate requests another interview slot
"Client interview amend"
Client can request another interview slot
"Candidate no longer interested"
Autoupdates where candidate status in any other shortlist = job accepted
"Job offer"
Client updates field where interview process successful
"Appointment accepted"
Autoupdates where candidate indicates offer accepted in his/her candidate vacancy shortlist
"Appointment offer refused"
Autoupdates where candidate indicates offer rejected in his/her candidate vacancy shortlist.

If the client indicates that he wishes to receive the CV, it is sent at step 18 to the client and the client, at step 19, is given an opportunity to indicate whether he is interested in the candidate. If the client is not interested in the candidate having seen the CV, he/she indicates this at step 21 by making an appropriate entry in the status box on his/her client shortlist 32. The process then skips to step 31 which is also reached if at step 17 (mentioned above) the client states he does not wish to receive the candidate's CV.

In step 31 it is determined whether the vacancy concerned was exclusive. If the vacancy was exclusive then at step 34 it is determined whether there is another match between the candidate and the skills and attributes required for a different vacancy. If so the process returns to step 14 described above. If, however, at step 34 it is determined that there is not another match then a message is generated at step 35 and sent to the candidate to confirm that no jobs are available at present and the program exits.

On the other hand, if at step 31, it is determined that the job was not exclusive it is determined at step 33 whether the candidate appears on any other client shortlist 32. If the candidate appears on another client shortlist 32 then the process exits as far as that vacancy is concerned and the process will be repeated for other matched vacancies. If in step 33 it is determined that the candidate no longer appears on any other shortlist, a message is displayed on the candidate's display 51 at step 35, to indicate that there are no jobs available at present for that candidate and the program exits.

We now return to consider the process if, at step 19, it is determined that having received the candidate's CV, the client is still interested in the candidate. When the client is interested in the candidate he updates the status box, at step 20, on his/her client shortlist 32 page to show that he/she is interested in the candidate. Then at step 22 the respective candidate vacancy shortlist 33 (see Figure 2) is updated to show that a client is interested in the candidate. This gives the candidate an opportunity to confirm whether he is interested in the vacancy.

The webpage or pages showing the candidate vacancy shortlists 33 contain a status box which can be occupied by a number of status statements. Some of these status options are automatically updated and some are selectable by the candidate. The following is a list of the status options and a brief outline of their meaning.

"New vacancy, confirm interest"
Autoupdates once a client has seen a candidate's CV and made status "request candidate interest"
"Reject vacancy, not suitable"
Can be applied by the applicant at any stage of the process
"Candidate interest confirmed"
Candidate confirms interest
"Request interview"
Autoupdates with client request and details
"Confirm interview"
Candidate confirms
"Client interview amend"
Autoupdates if client revisits interview module to to re-arrange interview
"Interview cancel, vacancy filled"
Autoupdates where candidate status = Interview confirmed, generated where status of another applicant = appointment confirmed and number of vacancies = zero
"Candidate interview amend"
Candidate can request another interview slot, if they cannot attend.
"Client interview amend"
Autoupdates if client rerequests another interview slot
"Candidate no longer interested"
Autoupdates where candidate status in any other shortlist = job accepted
"Job offer"
Autoupdates where Client updates field where interview process successful
"Appointment accepted"
Candidate accepts offer
"Appointment offer refused"
Candidate refuses job offer

At step 23 the candidate indicates whether he is interested in the vacancy by selecting the appropriate option for the status box.

If the candidate is not interested, then at step 32 the client shortlist 32 is updated to show that the client is not interested and the candidate's shortlist 33 is updated at step 26 to show that he has rejected this vacancy. Once this updating has been done the process returns to step 31 where it is determined whether the rejected vacancy was an exclusive vacancy and the steps following 31 as described above are carried out as appropriate.

If at step 23, the candidate indicates, that he is interested, then at step 24 the respective client shortlist status box is updated to show that the candidate is interested. Then at step 25 an interview arranging process is initiated where the client can suggest a date for an interview and this can be confirmed and/or re-arranged by both parties making use of the status options available for entry in their respective shortlist status boxes. Once the interview process has been concluded it is determined, at step 27, whether the candidate was successful. If the candidate was not successful then the process returns to step 32 and the subsequent steps are executed as described above so that any other vacancies for which the candidate is suitable can be explored.

If it is established at step 27 that the candidate was successful then it is initially determined, at step 28, whether the job was exclusive and if so the clients are invoiced at step 30 and the programme exits. If at step 28, it is determined that the job was not exclusive then at step 29 all of the other client shortlists 32 on which that candidate appeared are updated to show that another job has been accepted by the candidate. Then at step 30 the client whose job has been taken is invoiced and the process exits.

As mentioned above the process described above is implemented using suitable software allowing suitable inputs from users where appropriate. It is considered that given the flow chart shown in Figure 3 and the accompanying description a person skilled in the relevant art would be able to implement the system by providing suitable software and thus no further description is given.

There are a large number of different processes that might be used in matching candidate's skills and attributes to the available vacancies in accordance with step 3 above. Below is an outline of one possible matching procedure.

In this procedure, competence in English is assumed and thus no details regarding this are required for a vacancy or a candidate. Clients are asked to provide a maximum of 6 essential technical skills for each vacancy.

Besides English, it is possible to specify other languages as being essential, however, generally there would be a restriction to specifying a maximum of two languages as being essential for any given vacancy. Clients are also asked to specify a maximum of two essential qualifications for a given vacancy.

Besides these essential skills and attributes other details are entered such as job title, salary, location, required availability and skills and attributes which are desirable but not essential.

Before the matching process begons, the candidate enters information which is requested by appropriate pages of the website. In the matching process the entered information is compared with the requirements of the appropriate vacancies. The candidate is required to input the following details: current job title, desired job titles, desired salary, locations prepared to work, availability, primary technical skills, other technical skills, languages, qualifications.

In general terms there are certain matches that must be found between a candidate and the available vacancies if a payment is to be available. These necessary matches are described below.

The candidate must match against the location.

The candidate must match against job title. The match may be made between the candidate's current or desired job title.

The candidate must match on salary band. This must either be the exact salary band for the vacancy or one to either side of the exact band.

The candidate must match on availability. The candidate's availability is calculated from the date that they accessed the website and entries made in availability fields on the website. The candidate's availability must be compatible with a "latest start date" specified for the vacancy.

The candidate must match any language or qualifications specified as essential.

In the case of technical skills the process depends on the number of technical skills specified as essential. If the vacancy has four or fewer essential technical skills specified, then the candidate must have indicated, as primary skills, all of those specified. If there are more than four essential technical skills specified, then the candidate must have indicated, as primary skills, at least four of those specified.

The matching requirements listed above are the minimum that will be set for a vacancy and are termed a level 0 match. The matching process has higher levels of matching, ie levels 1, 2 and 3 which can be used if particularly close matches are desired and/or can be introduced once selected levels of candidates who are suitable for a particular vacancy have been found. The different levels are summarised in table 1 below.

The matching system, can for example, be set up so that initially matching is carried out at level 0 but once 30% of the desired number of suitable candidates have been found the matching is carried out at level 1, a shift to level 2 could be made at 50% etc. In general terms, threshold values can be chosen and as these are passed, the level of match required can be changed.

| LEVEL | VACANCY HAS 4 OR LESS ESSENTIAL TECH.SKILLS | VACANCY HAS 5 ESSENTIAL TECH.SKILLS | VACANCY HAS 6 ESSENTIAL TECH.SKILLS |
|---|---|---|---|
| Zero | Must match to *all* essential technical skills entered into the primary fields | Must match to *any* 4 essential technical skills entered into the primary fields | Must match to *any* 4 essential technical skills entered into primary fields |
| One | Must match to *all* essential technical skills and *any* single desirable skill (inc. langs and quals) taken from either the primary or secondary fields | Must match to *all* essential technical skills taken from either the primary or secondary fields | Must match to *any* 5 essential technical skills taken from either the primary or secondary fields |
| Two | Must match to *all* essential technical skills and *any* 2 desirable skills (inc. langs and quals) taken from either the primary or secondary fields | Must match to *all* essential technical skills and *any* single desirable skill (inc. langs and quals) taken from either the primary or secondary fields | Must match to *all* essential technical skills taken from either the primary or secondary fields |
| Three | Must match to *all* essential technical skills and *any* 3 desirable skills (inc. langs and quals) taken from either the primary or secondary fields | Must match to *all* essential technical skills and *any* 2 desirable skills (inc. langs and quals) taken from either the primary or secondary fields | Must match to *all* essential technical skills and *any* single desirable skill (inc. langs and quals) taken from either the primary or secondary fields |

Table 1

Figures 4A to 4K as well as Figures 5A, 5B and 6 show screens which are displayed in a candidate's browser when visiting a website implemented in accordance with an embodiment of the present invention. This embodiment of the invention is similar to but not identical to the embodiment described above. In particular, the process begins with the submission of candidate specific information and there are no advertisements for specific vacancies. Furthermore this embodiment deals only with the process of matching candidates to vacancies and not to the further processes of notifying employers and arranging interviews etc.

Figures 4A to 4K show the basic sequence of web pages which a candidate visiting the website will navigate through, when submitting their own candidate specific information in the hope of ultimately securing payment on provision of a CV which is of interest to the recruitment firm which administers the site.

Figure 4A shows a first web page which a candidate sees when visiting the site. If the candidate decides to proceed in using the site, he or she must use his or her mouse 53, or other similar pointing device, to select (ie click on) a link marked 'we pay you' 401. Once this is done a second web page as shown in Figure 4B is displayed to the candidate. If the candidate decides to proceed he or she must next click on a next button 402.

Clicking on the next button 402 brings up a third web page which may be used by the candidate to indicate at least some of their skills and attributes. The page includes four primary technical skills fields 403. These may be filled by the candidate clicking on the appropriate down arrow at the right-hand edge of the field and selecting the appropriate technical skill from a drop-down menu which appears when this down arrow is clicked. Each of the four primary technical skills fields 403 has an associated years of experience field 404 which again may be completed by a user clicking on the appropriate down arrow and selecting the appropriate number of years of experience from a drop-down menu. Candidates filling out the four fields for primary skills 403 are instructed to rank their primary technical skills, putting their strongest skill as skill one.

The page also comprises a further technical skills field 405, a professional qualifications field 406, a languages spoken field 407 and a years working in the IT industry field 408. In the case of each of these fields 405-408, the candidate may select appropriate skills, qualifications, languages and a number of years from the options shown in the scroll lists or drop-down menus. The fields for entering further technical skills, professional qualifications and languages spoken 405, 406 and 407 allow the selection of multiple options from the lists given.

Once the candidate has entered all of the appropriate information he or she may move to the next web page by clicking on the next button 409. However, if an error is made the reset button 410 may be pressed to clear the information inserted.

Figure 4D shows an example of the third web page when completed with a candidate's selected information.

When the next button 409 on the third web page is pressed, a fourth web page, as shown in Figure 4E, is presented to the candidate. This page includes a field to be completed with the candidates current job 411, a field to be completed with the candidates preferred roles 412 and indicator boxes 413,414 where the candidate may indicate 'Yes' or 'No' to whether they would accept a new role which is similar to their current job and indicate whether they are legally entitled to be in permanent employment in the EU. The fourth web page also comprises a field for indicating a preferred salary 415, a field for indicating availability 416 and a field for indicating preferred locations for work 417.

Each of the fields 411, 412, 415, 416 and 417 may be completed using options from the appropriate drop-down menu or scroll list.

The fourth web page as shown in Figure 4E further comprises a reset button 418, a search button 419 and a select locations by map button 420.

If the select locations by map button 420 is pressed, then a fifth web page as shown in Figure 4F is displayed to the candidate. This enables the candidate to select preferred locations for employment by selecting appropriate parts of the map using their mouse 53 or other suitable pointing device.

It will be noted that both the third and fourth web pages allow multiple selections to be made for some of the fields, in particular those which include scroll lists, whilst only single selections are possible for other fields, in particular those with drop-down menus.

The information entered on the third and fourth web pages is usable in matching operations of the type described above with reference to step 3 of Figures 3A to 3C. To facilitate the matching process, the fields on the third and fourth web pages may only be filled with options given in the respective menus.

Once the fourth web page as shown in Figure 4E is completed, with or without use of fifth web page, and the search button 419 is pressed, a sixth web page, as shown in Figure 4G is displayed to the user. The sixth web page indicates, to the candidate, a payment which will be made upon submission of his or her CV. The sixth web page includes a home button 421 which, if pressed, will return the candidate to the start of the process, and a send CV button 422.

When the send CV button 422 is pressed, a seventh web page, as shown in Figure 4H, is displayed. This has fields 423 for entering contact details including name, address, postcode, telephone number (including an indication of the phone location, eg home, work) and e-mail address, and a field 424 for entering the location of a file containing the candidate's CV. A browse button 425 is also provided so that if the candidate cannot enter the file name and location of his or her CV directly, they may locate and select the file in a conventional manner from windows brought up when pressing the browse button 425. The seventh web page also comprises a home button 426, a reset button 427 and a send button 428.

An example of the seventh web page when completed by a candidate is shown in Figure 4I.

When the send button on the seventh web page 428 is pressed, an eighth web page, as shown in Figure 4J, is displayed. This includes a plurality of tick boxes 429 which can be ticked by a user to prevent his or her CV being sent to a particular company or companies. The eighth web page also comprises a home button 430, a reset button 431 and a send button 432.

If the candidate presses the send button 432, the process is finalised and providing that everything has functioned correctly, a ninth web page, as shown in Figure 4K, is displayed to the user. This ninth page includes a confirmation that the process has worked and automatically returns the candidate to the website home page or allows the candidate to return to the home page by clicking on the appropriate link.

The above sequence of nine web pages, as shown in Figures 4A-4K, represent the path followed through the site where a suitable match is found between a vacancy and the skills and attributes submitted by the user. It will be appreciated however that there will be some occurrences where no match is found. In the case where a candidate enters their candidate specific information but no match with a vacancy is found, then the progress through the site is the same for the first five web pages, as shown in Figures 4A-4F above, but in the place of the sixth web page, an unsuccessful candidate is shown in apology web page, as shown in Figure 5A.

This apology web page includes a home button 433 and a send CV button 434. If the candidate wishes to terminate the CV submission procedure, he or she may press the home button 433. Alternatively the candidate may choose to submit his or her CV by pressing the send CV button 434. If the send CV button 434 is pressed, then the candidate's CV can be submitted even though no match has been made. In this case the CV will be kept on file and a payment might be made in future, if a suitable vacancy arises.

Upon pressing the send CV button 434, the candidate is presented with the seventh web page as shown in Figure 4H so that he or she may submit their personal information and their CV. If the information is submitted by pressing the send button 428, an acknowledgment web page as shown in Figure 5B is displayed to confirm that the CV has been successfully submitted. The candidate is then redirected automatically back to the website home page, or is given the opportunity to return to the home page.

Besides the two possible processes described above, it is possible that a candidate goes through the procedure described with reference to Figures 4A-4I, but on submission of his or her personal information and CV, it is determined by the system that that candidate has already submitted his or her CV. If this is the case, then an acknowledgment web page, as shown in Figure 6, is presented to the candidate. This explains that because the candidate's CV has previously been submitted by via the website, it is possible that no payment will be due at this time. The system is arranged to check whether that candidate has been paid for previously submitting his or her CV or whether the CV was previously submitted without payment. If it is determined that no payment has been made previously, then a suitable cheque will be sent to the candidate. On the other hand, if a payment has been made previously then no payment will be made in this case.

It will be appreciated that the above described web pages represent only one way in which the present invention may be implemented. Those skilled in the art would be able to generate other sequences of web pages, and indeed other, non web based, systems for carrying out the invention.

Although embodiments of the invention are described above in relation to various items of hardware and different processes, it will be appreciated that software can play an important role in the implementation of the invention. As such, carriers such as electrical carrier signals, as well as more concrete carriers such as floppy discs, CD-ROMs, DVDs, hard drives, ROMs and other memory devices carrying instructions and/or data can also embody at least some aspects of the invention.

## Claims

**1.** A method of recruitment advertising comprising the steps of:

requesting submission of, and receiving candidate specific information from candidates;
performing a matching operation between the received candidate specific data and at least one candidate suitability requirement; and
authorising making of payments to candidates from whom candidate specific information has been received and whose candidate specific information is determined, in the matching operation, to meet at least one level of matching criteria.

**2.** A method according to claim 1 comprising the further steps of:

storing details of vacancies, each vacancy having at least one associated candidate suitability requirement; and

authorising making of payments to candidates who satisfy at least one associated candidate suitability requirement of at least one vacancy.

**3.** A method according to claim 1 or claim 2 comprising the further step of varying the value of said payments in dependence on received candidate specific information.

**4.** A method according to claim 3 when dependent on claim 2 in which the value of payment, PPAY, associated with each vacancy and available for authorisation, varies in dependence on received candidate specific information by virtue of being calculated in accordance with the following equation:

$$PPAY = PMAX \times (1 - [0.8 \times (NA/(NP \times C))]),$$

where PMAX is a predetermined maximum level of payment, NA is a number of candidates who have submitted candidate specific information which meets predetermined criteria, NP is a number of positions to be filled associated with the vacancy and C is a predetermined desired number of candidates submitting candidate specific information which meets predetermined criteria per position associated with the vacancy.

**5.** A method according to any preceding claim which comprises the step of selecting a level of matching criteria to be used in the matching operation from a plurality of levels of matching criteria, wherein higher levels of criteria are indicative of a closer match between the submitted candidate specific information and the at least one candidate suitability requirement of at least on vacancy, than are lower levels of criteria.

**6.** A method according to claim 5 comprising the step of increasing a current level of matching criteria being used when a threshold in the number of candidates who have submitted candidate specific information meeting the current level of matching criteria is passed.

**7.** A method according to any preceding claim implemented using a computer network.

**8.** A method of using a communications network for recruitment advertising comprising the steps of:

storing files concerning a plurality of job vacancies and information concerning payments which will be made to candidates when predetermined conditions are met in database means, wherein each vacancy file comprises information concerning a job vacancy and at least one candidate suitability requirement for that vacancy,
making details concerning said payments available via the communications network,
receiving candidate specific data from candidates via the communications network,
comparing received candidate specific data with the requirements specified in said files, and
varying the value of payments available and indicated via the communications network in dependence on the results of the comparing step.

**9.** A method according to claim 8 in which the predetermined conditions include the submission of candidate specific information which satisfies predetermined criteria and wherein the value of payments available is varied in dependence on the number of replies which have been received that satisfy said criteria.

**10.** Apparatus for recruitment advertising via a communications network, the apparatus comprising:

database means for storing information concerning payments which will be made to candidates when predetermined conditions are met and files concerning a plurality of job vacancies, wherein each vacancy file comprises information concerning a job vacancy and at least one candidate suitability requirement for that vacancy,
means for making details concerning said payments available via the communications network,
means for receiving candidate specific data from candidates via the communications network,
means for comparing received candidate specific data with the requirements specified in said files, and
means for varying the value of payments available and indicated via the communications network in dependence on the results of said comparison.

**11.** Apparatus according to claim 10 in which the predetermined conditions include the submission of candidate specific information which satisfies predetermined criteria and where the value of payments available is varied in dependence on the number of replies which have been received that satisfy said criteria.

**12.** A method of using a communications network for recruitment comprising the steps of:

storing files concerning a plurality of job vacancies in a database, wherein each vacancy file comprises information concerning a job vacancy including at least one candidate suitability requirement for that vacancy,
receiving candidate specific data from candidates via the communications network, and
making payments to candidates from whom candidate specific information has been received and who satisfy at least one associated candidate suitability requirement of at least one vacancy.

**13.** A method according to claim 12 comprising the further step of varying the value of said payments in dependence on received candidate specific information.

**14.** A method according to claim 9 or claim 13 or an apparatus according to claim 11 in which the value, PPAY, associated with each vacancy, is varied in dependence on received candidate specific information by virtue of being calculated in accordance with the following equation:

$$PPAY = PMAX \times (1 - [0.8 \times (NA/(NP \times C))]),$$

where PMAX is a predetermined maximum level of payment, NA is a number of candidates who have submitted candidate specific information which meets predetermined criteria, NP is a number of positions to be filled associated with the vacancy and C is a predetermined desired number of candidates submitting candidate specific information which meets predetermined criteria per position associated with the vacancy.

**15.** A user interface located at a user device for use in jobseeking, comprising:

an output mechanism including a display unit for displaying user perceivable images, the output mechanism operable to display details of a payment which will be made to a candidate who submits candidate specific information when predetermined conditions are met; and
an input mechanism for allowing input of candidate specific information by a user and converting the information into a digital representation for transmission to a remote database storing details of vacancies.

**16.** A user interface according to claim 15 in which the input mechanism includes said display unit and a pointing device, in use the display displaying at least one image comprising a plurality of fields for the reception of candidate specific information and the fields being selectable for completion by operation of the pointing device.

**17.** A user interface according to claim 16 in which there is a plurality of matching criteria fields, data entered in at least some of which fields will be used in a matching operation between submitted candidate specific information and candidate suitability requirements associated with vacancies stored in the database, and each of the matching criteria fields being completable only from respective menu options.

**18.** A method of recruitment advertising comprising the steps of:

storing details of vacancies, each vacancy having an associated payment payable to a candidate when predetermined conditions are met;
requesting submission of, and receiving candidate specific information from candidates; and
varying the value of payment associated with each vacancy in dependence on received candidate specific information.

**19.** A method according to any one of claims 1 to 9 and 12 to 14 in which no payment will be authorised and/or made to a candidate without receipt of that candidate's CV.

**20.** A computer program comprising software code portions for performing the steps of the method according to any one of Claims 1 to 9, 12 to 14, 18 and 19 when run on at least one computer means.

**21.** A computer program comprising software code portions which when run on at least one computer means provide the apparatus according to claim 10, claim 11 or claim 14.

**22.** A carrier having thereon computer executable instructions for causing a computer to generate a graphical user interface on a display device, the graphical user interface being arranged to allow input of candidate specific information by a user, and to display details of a payment which will be made to a candidate who submits candidate specific information when predetermined conditions are met.

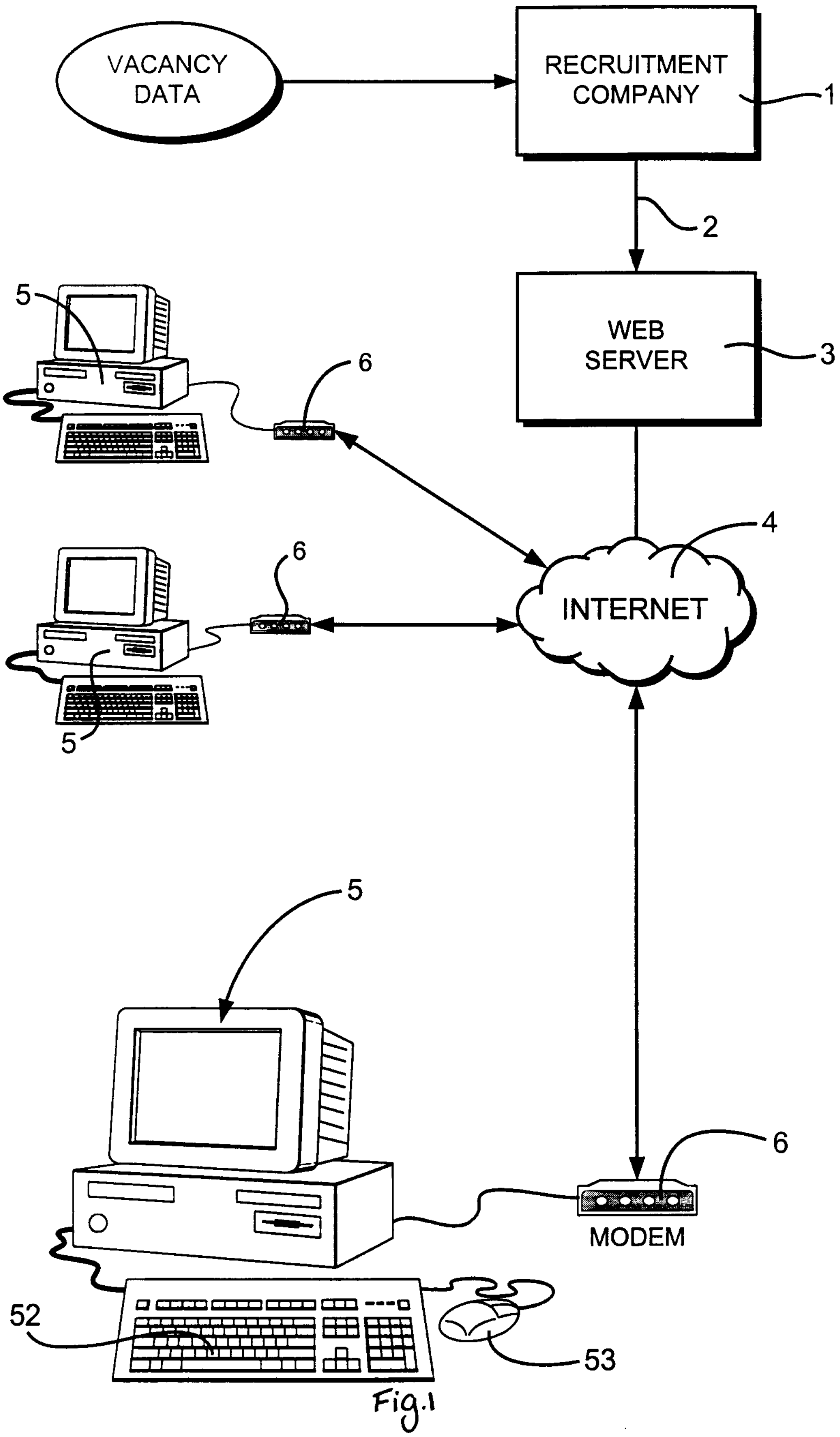
VACANCY DATA
RECRUITMENT COMPANY
1
2
WEB SERVER
3
5
6
4
INTERNET
6
5
5
6
MODEM
52
53

Fig.1

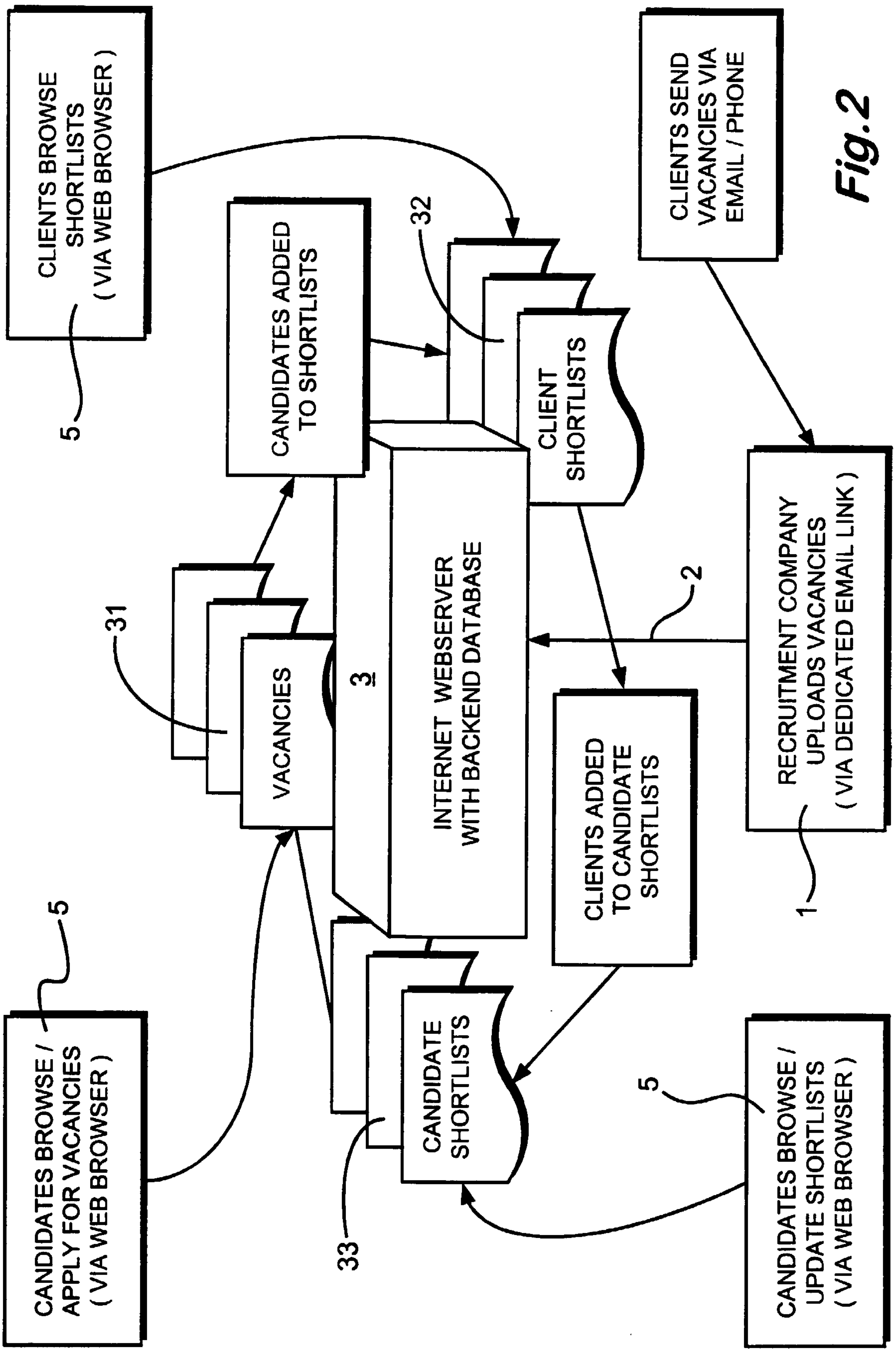
CLIENTS BROWSE SHORTLISTS ( VIA WEB BROWSER )
5
CANDIDATES ADDED TO SHORTLISTS
32
CLIENT SHORTLISTS
CLIENTS SEND VACANCIES VIA EMAIL / PHONE
31
VACANCIES
3
INTERNET WEBSERVER WITH BACKEND DATABASE
2
RECRUITMENT COMPANY UPLOADS VACANCIES ( VIA DEDICATED EMAIL LINK )
1
CLIENTS ADDED TO CANDIDATE SHORTLISTS
5
CANDIDATES BROWSE / APPLY FOR VACANCIES ( VIA WEB BROWSER )
CANDIDATE SHORTLISTS
33
5
CANDIDATES BROWSE / UPDATE SHORTLISTS ( VIA WEB BROWSER )

Fig.2

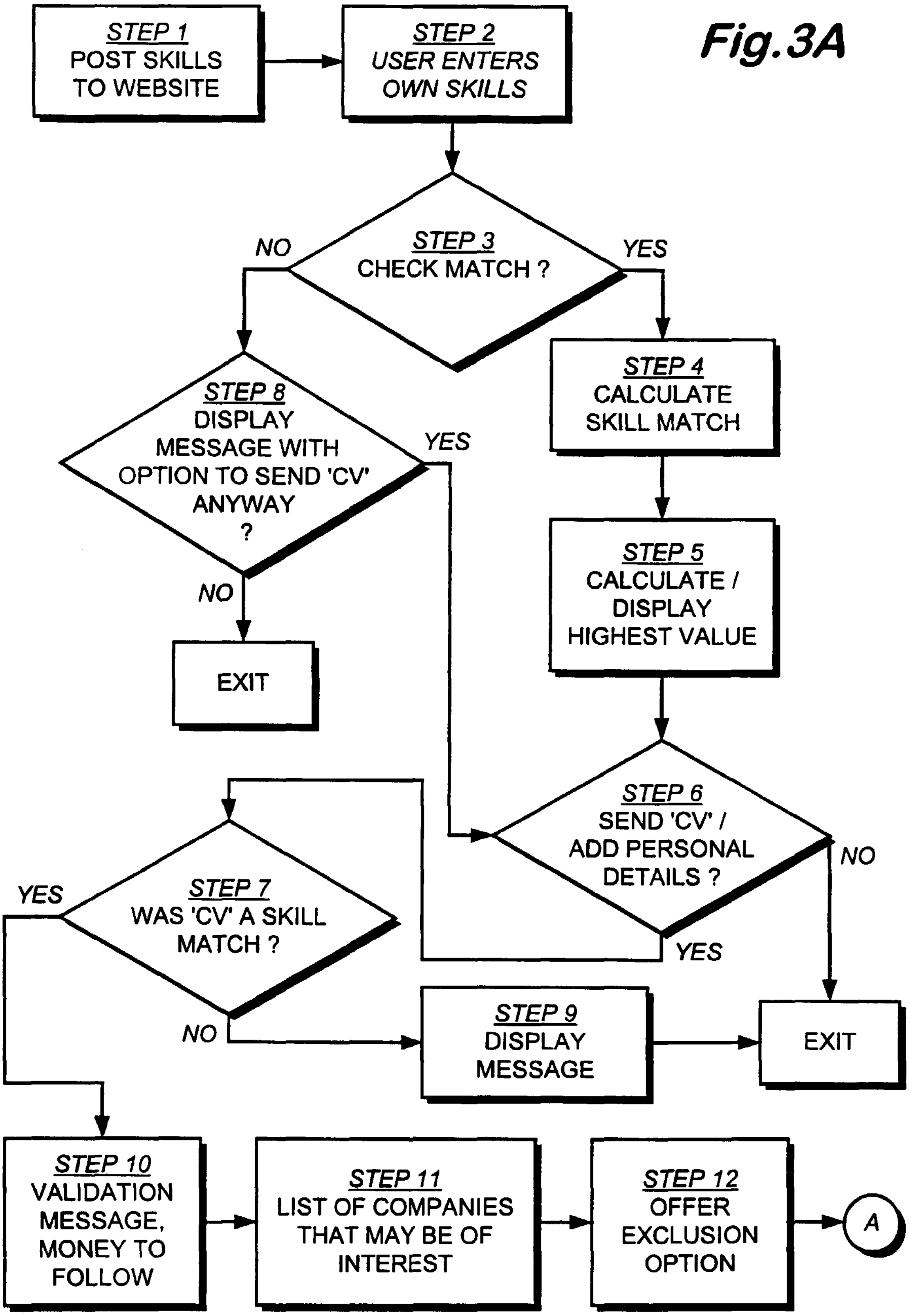
STEP 1
POST SKILLS TO WEBSITE
STEP 2
USER ENTERS OWN SKILLS
STEP 3
CHECK MATCH ?
NO
YES
STEP 4
CALCULATE SKILL MATCH
STEP 8
DISPLAY MESSAGE WITH OPTION TO SEND 'CV' ANYWAY ?
YES
NO
EXIT
STEP 5
CALCULATE / DISPLAY HIGHEST VALUE
STEP 6
SEND 'CV' / ADD PERSONAL DETAILS ?
NO
YES
STEP 7
WAS 'CV' A SKILL MATCH ?
YES
NO
STEP 9
DISPLAY MESSAGE
EXIT
STEP 10
VALIDATION MESSAGE, MONEY TO FOLLOW
STEP 11
LIST OF COMPANIES THAT MAY BE OF INTEREST
STEP 12
OFFER EXCLUSION OPTION
A

Fig.3A

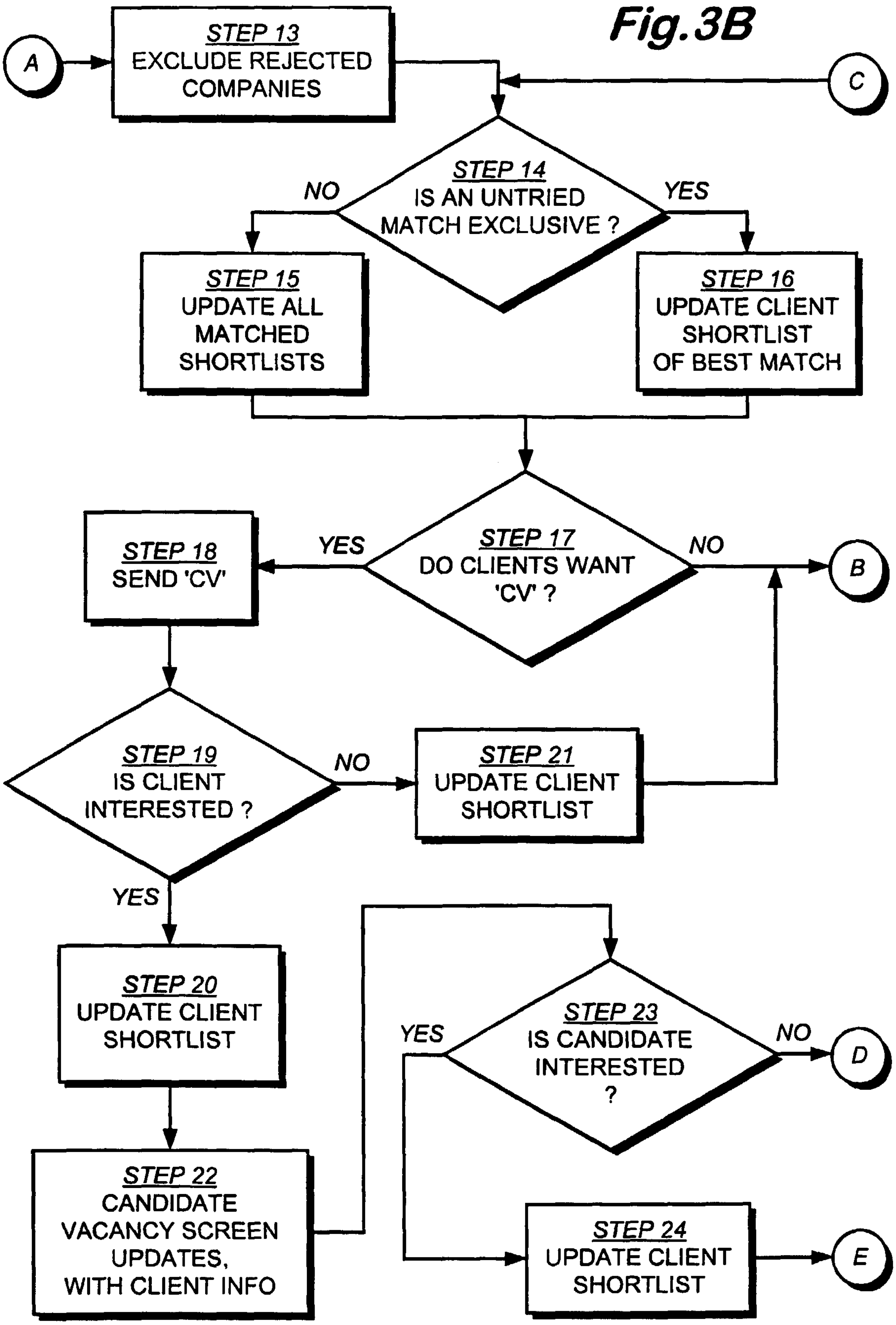
Fig.3B
A
STEP 13
EXCLUDE REJECTED COMPANIES
C
STEP 14
IS AN UNTRIED MATCH EXCLUSIVE ?
NO
YES
STEP 15
UPDATE ALL MATCHED SHORTLISTS
STEP 16
UPDATE CLIENT SHORTLIST OF BEST MATCH
STEP 17
DO CLIENTS WANT 'CV' ?
YES
NO
B
STEP 18
SEND 'CV'
STEP 19
IS CLIENT INTERESTED ?
NO
STEP 21
UPDATE CLIENT SHORTLIST
YES
STEP 20
UPDATE CLIENT SHORTLIST
STEP 22
CANDIDATE VACANCY SCREEN UPDATES, WITH CLIENT INFO
STEP 23
IS CANDIDATE INTERESTED ?
YES
NO
D
STEP 24
UPDATE CLIENT SHORTLIST
E

Fig.3C

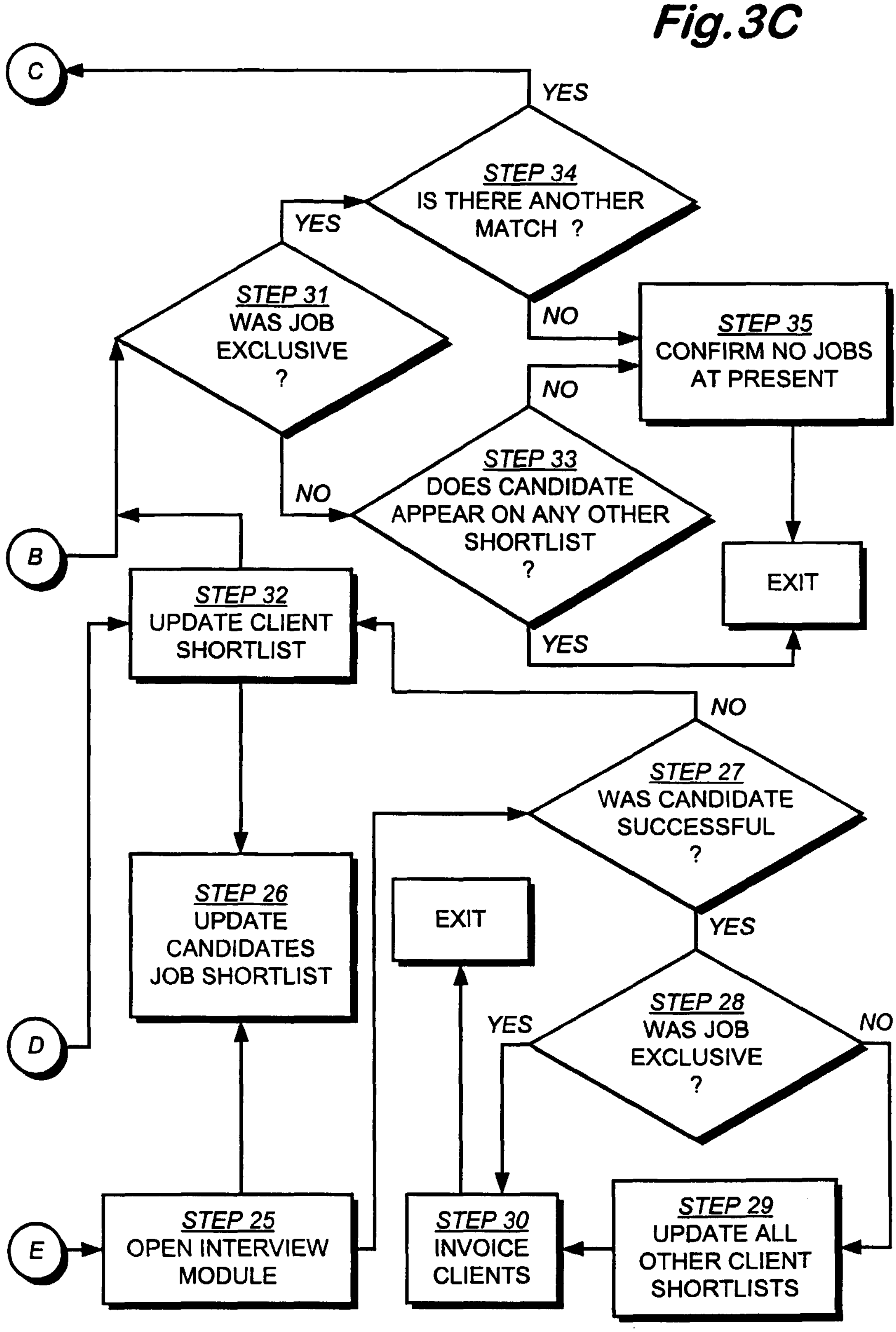
C
YES
STEP 34
IS THERE ANOTHER MATCH ?
YES
STEP 31
WAS JOB EXCLUSIVE ?
NO
STEP 35
CONFIRM NO JOBS AT PRESENT
NO
NO
STEP 33
DOES CANDIDATE APPEAR ON ANY OTHER SHORTLIST ?
B
EXIT
STEP 32
UPDATE CLIENT SHORTLIST
YES
NO
STEP 27
WAS CANDIDATE SUCCESSFUL ?
EXIT
YES
STEP 26
UPDATE CANDIDATES JOB SHORTLIST
YES
STEP 28
WAS JOB EXCLUSIVE ?
NO
D
STEP 25
OPEN INTERVIEW MODULE
E
STEP 30
INVOICE CLIENTS
STEP 29
UPDATE ALL OTHER CLIENT SHORTLISTS

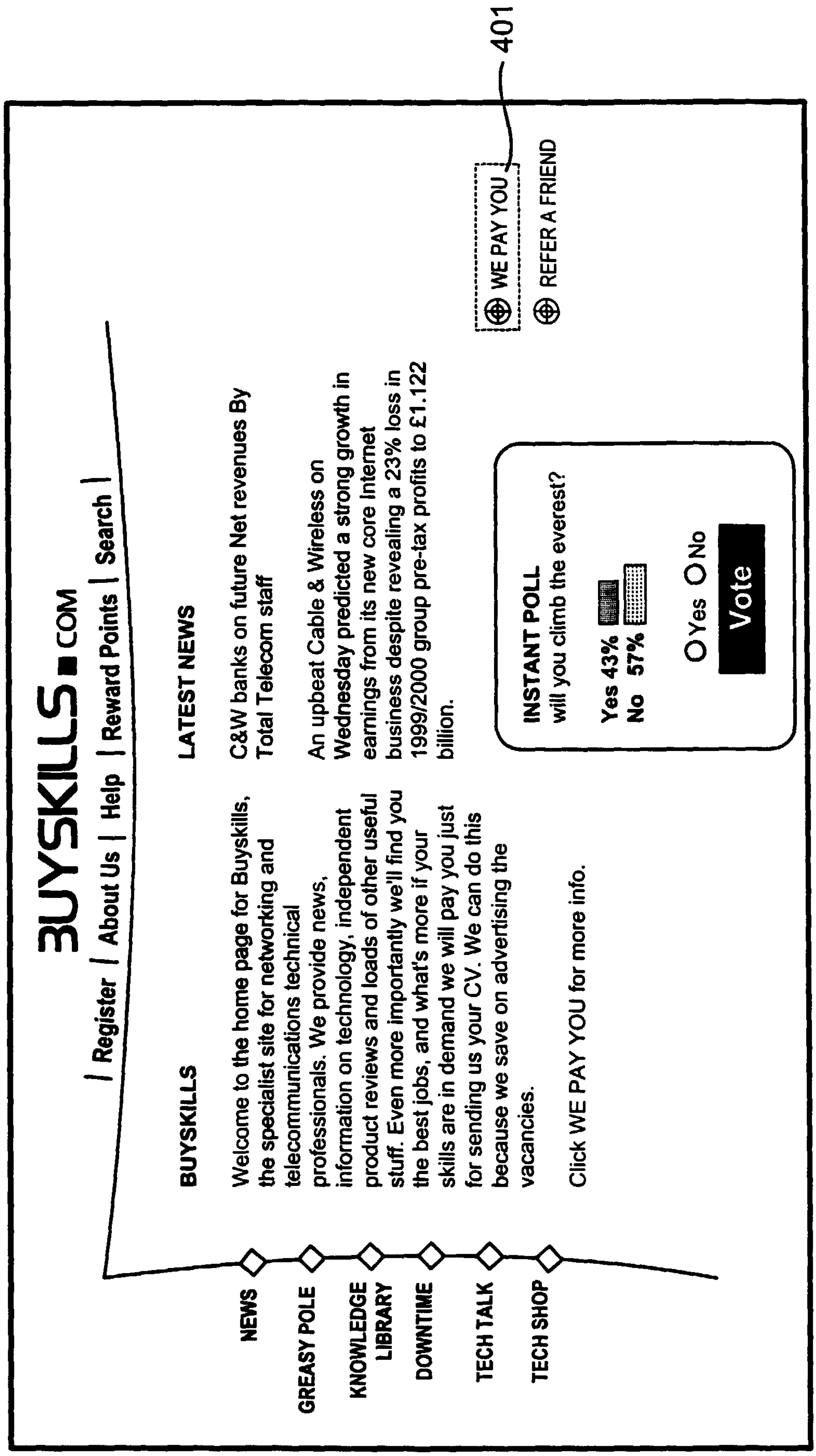
401
BUYSKILLS.COM
| Register | About Us | Help | Reward Points | Search |
NEWS
GREASY POLE
KNOWLEDGE LIBRARY
DOWNTIME
TECH TALK
TECH SHOP
BUYSKILLS
Welcome to the home page for Buyskills, the specialist site for networking and telecommunications technical professionals. We provide news, information on technology, independent product reviews and loads of other useful stuff. Even more importantly we'll find you the best jobs, and what's more if your skills are in demand we will pay you just for sending us your CV. We can do this because we save on advertising the vacancies.
Click WE PAY YOU for more info.
LATEST NEWS
C&W banks on future Net revenues By Total Telecom staff
An upbeat Cable & Wireless on Wednesday predicted a strong growth in earnings from its new core Internet business despite revealing a 23% loss in 1999/2000 group pre-tax profits to £1.122 billion.
WE PAY YOU
REFER A FRIEND
INSTANT POLL
will you climb the everest?
Yes 43%
No 57%
Yes
No
Vote

Fig.4A

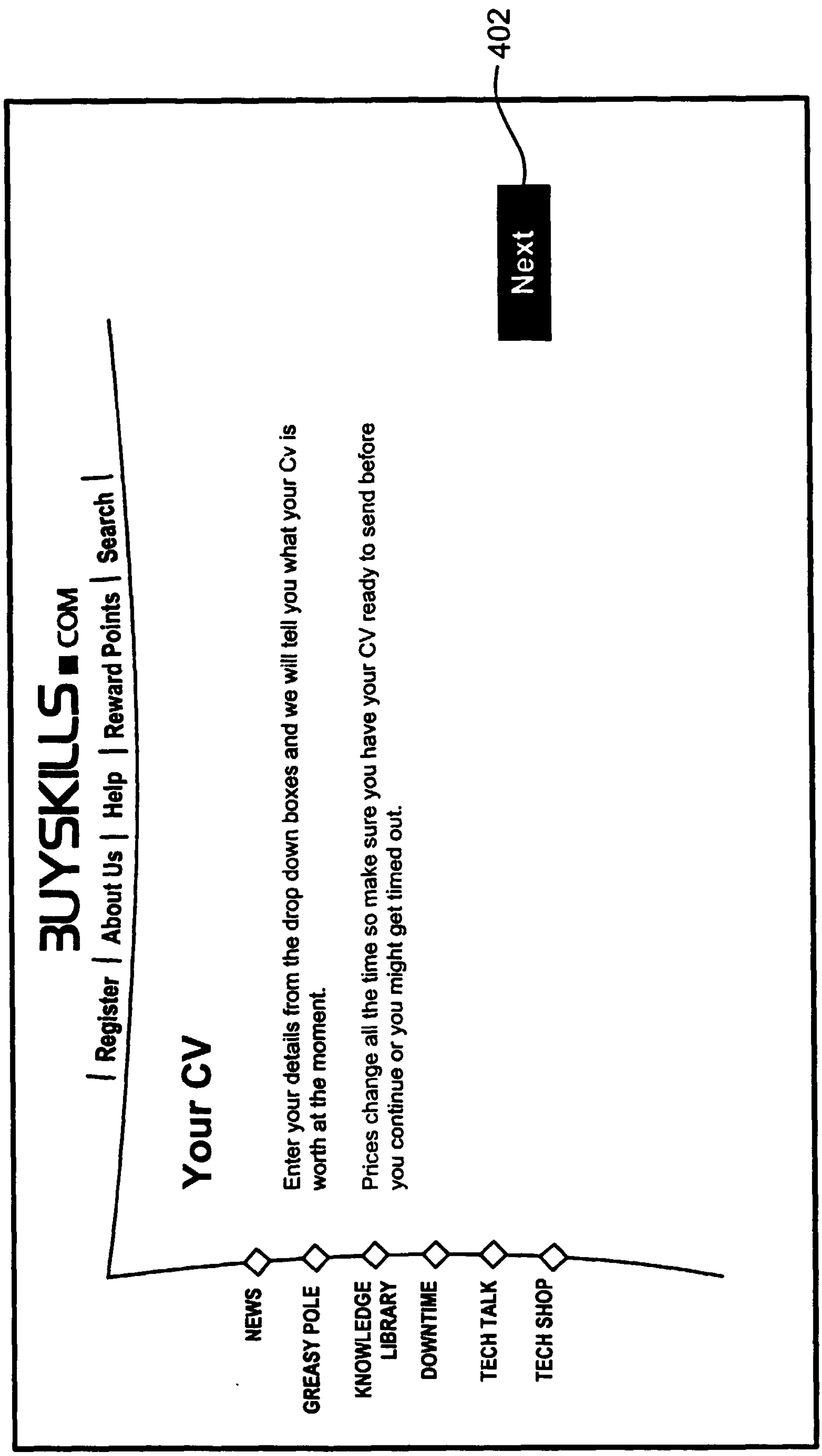
402
BUYSKILLS.COM
Register | About Us | Help | Reward Points | Search |
Your CV
Enter your details from the drop down boxes and we will tell you what your Cv is worth at the moment.
Prices change all the time so make sure you have your CV ready to send before you continue or you might get timed out.
Next
NEWS
GREASY POLE
KNOWLEDGE LIBRARY
DOWNTIME
TECH TALK
TECH SHOP

Fig.4B

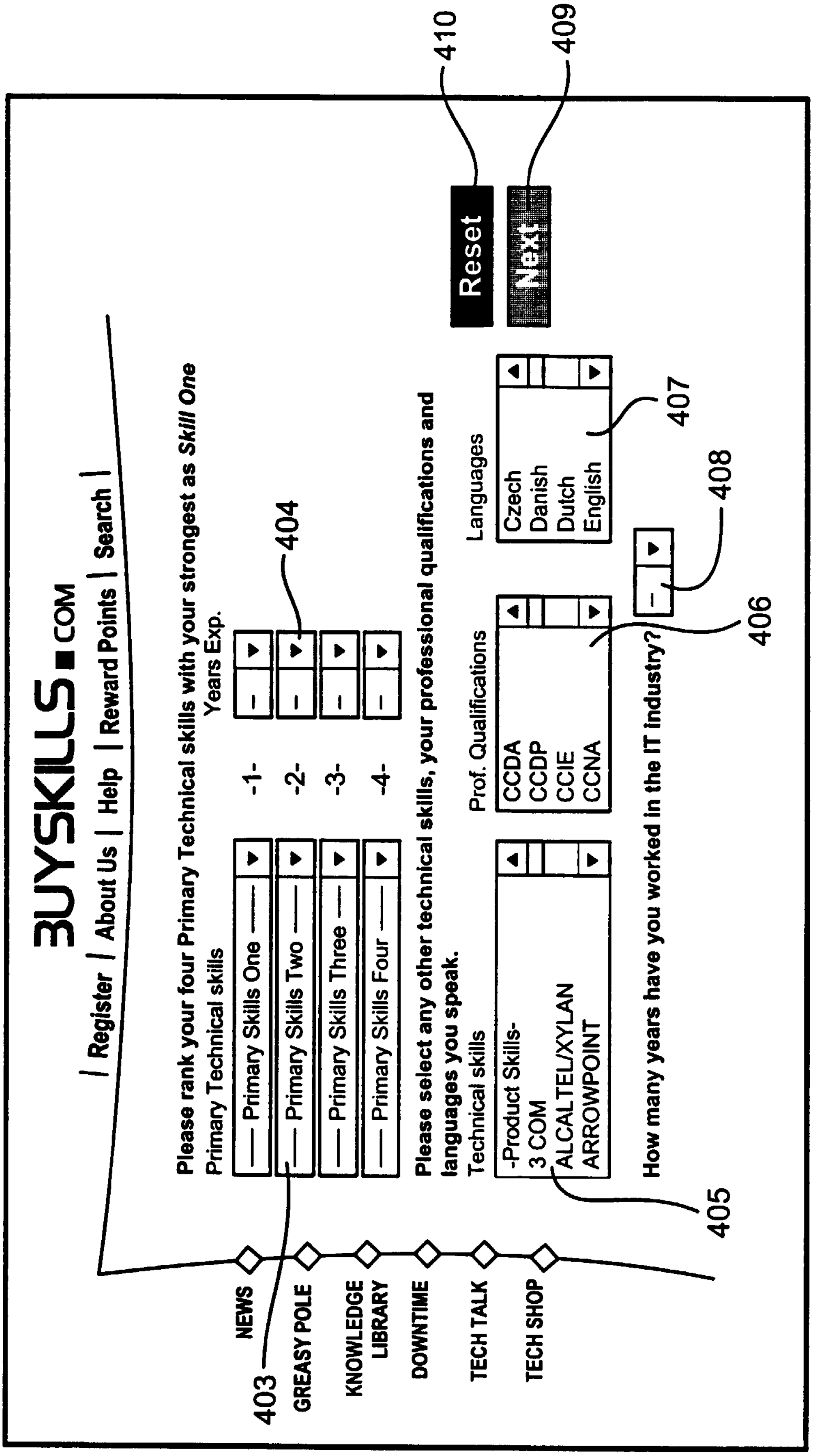
BUYSKILLS.COM
Register | About Us | Help | Reward Points | Search
NEWS
GREASY POLE
KNOWLEDGE LIBRARY
DOWNTIME
TECH TALK
TECH SHOP
Please rank your four Primary Technical skills with your strongest as Skill One
Primary Technical skills
Years Exp.
— Primary Skills One — -1-
— Primary Skills Two — -2-
— Primary Skills Three — -3-
— Primary Skills Four — -4-
Please select any other technical skills, your professional qualifications and languages you speak.
Technical skills
-Product Skills-
3 COM
ALCALTEL/XYLAN
ARROWPOINT
Prof. Qualifications
CCDA
CCDP
CCIE
CCNA
Languages
Czech
Danish
Dutch
English
How many years have you worked in the IT industry?
Reset
Next
403
404
405
406
407
408
409
410

*Fig.4C*

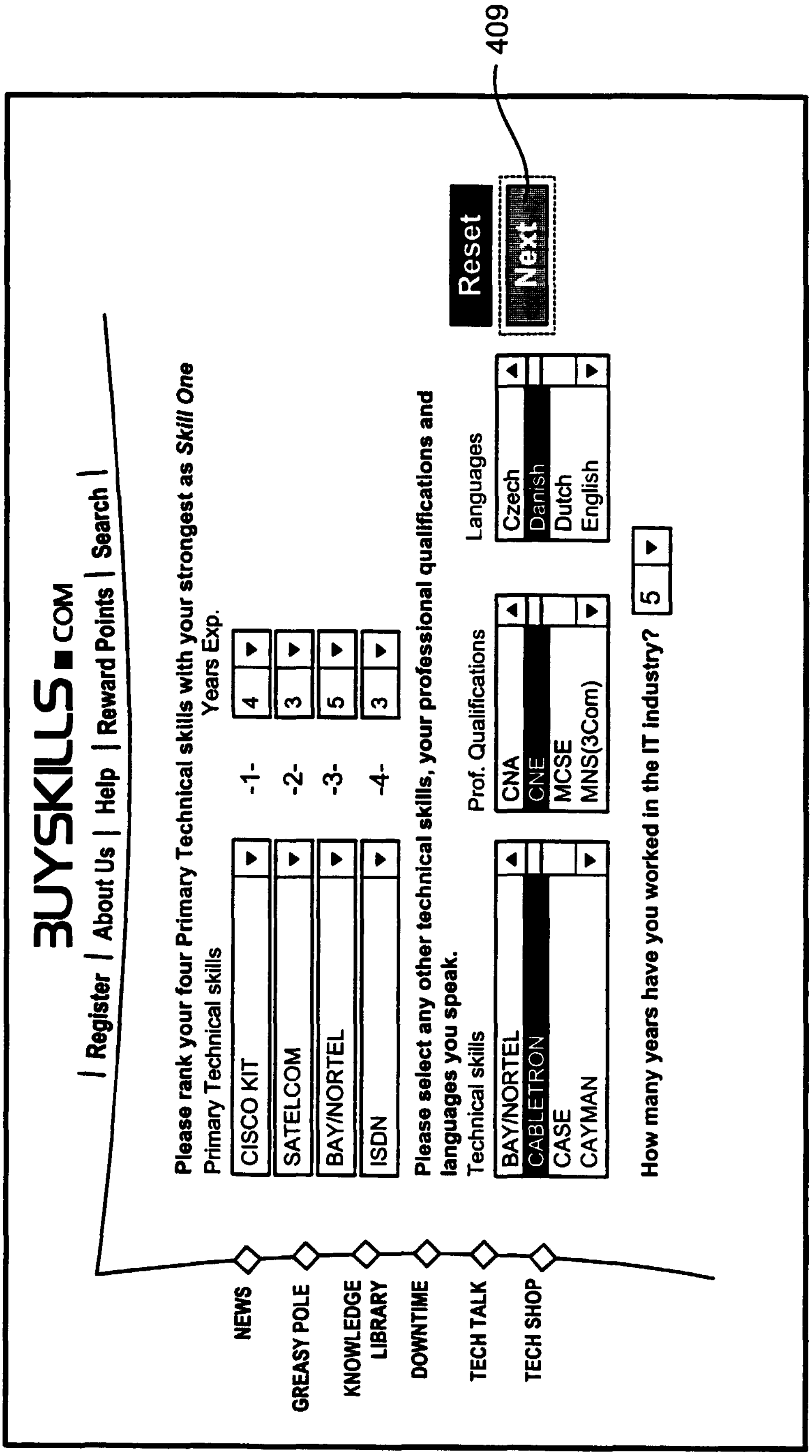
409
BUYSKILLS.COM
| Register | About Us | Help | Reward Points | Search |
NEWS
GREASY POLE
KNOWLEDGE LIBRARY
DOWNTIME
TECH TALK
TECH SHOP
Please rank your four Primary Technical skills with your strongest as Skill One
Primary Technical skills
Years Exp.
CISCO KIT
-1-
4
SATELCOM
-2-
3
BAY/NORTEL
-3-
5
ISDN
-4-
3
Please select any other technical skills, your professional qualifications and languages you speak.
Technical skills
BAY/NORTEL
CABLETRON
CASE
CAYMAN
Prof. Qualifications
CNA
CNE
MCSE
MNS(3Com)
Languages
Czech
Danish
Dutch
English
How many years have you worked in the IT industry?
5
Reset
Next

Fig.4D

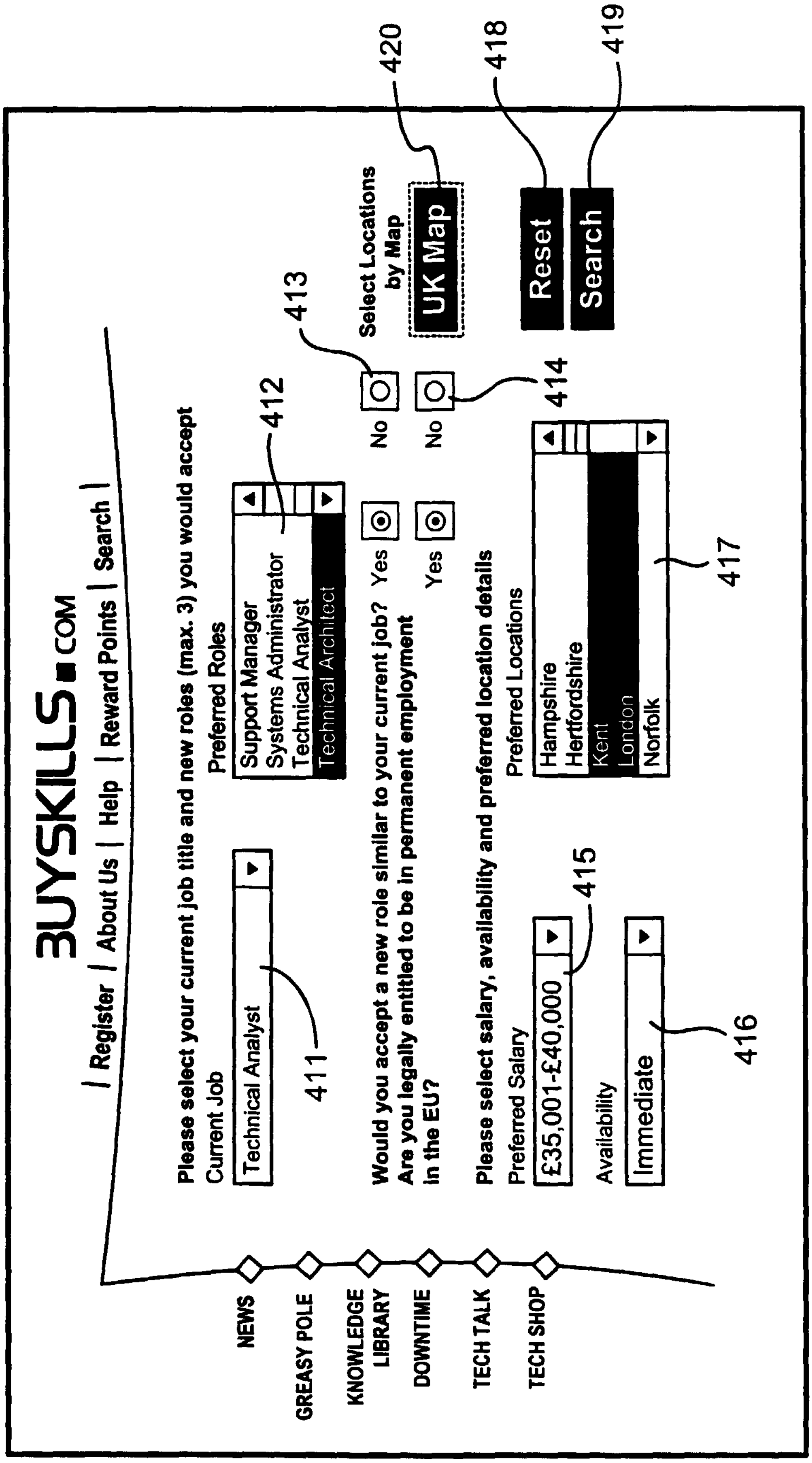
BUYSKILLS.COM
Register | About Us | Help | Reward Points | Search
NEWS
GREASY POLE
KNOWLEDGE LIBRARY
DOWNTIME
TECH TALK
TECH SHOP
Please select your current job title and new roles (max. 3) you would accept
Current Job
Technical Analyst
Preferred Roles
Support Manager
Systems Administrator
Technical Analyst
Technical Architect
Would you accept a new role similar to your current job? Yes No
Are you legally entitled to be in permanent employment in the EU? Yes No
Select Locations by Map
UK Map
Please select salary, availability and preferred location details
Preferred Salary
£35,001-£40,000
Availability
Immediate
Preferred Locations
Hampshire
Hertfordshire
Kent
London
Norfolk
Reset
Search
411
412
413
414
415
416
417
418
419
420

Fig.4E

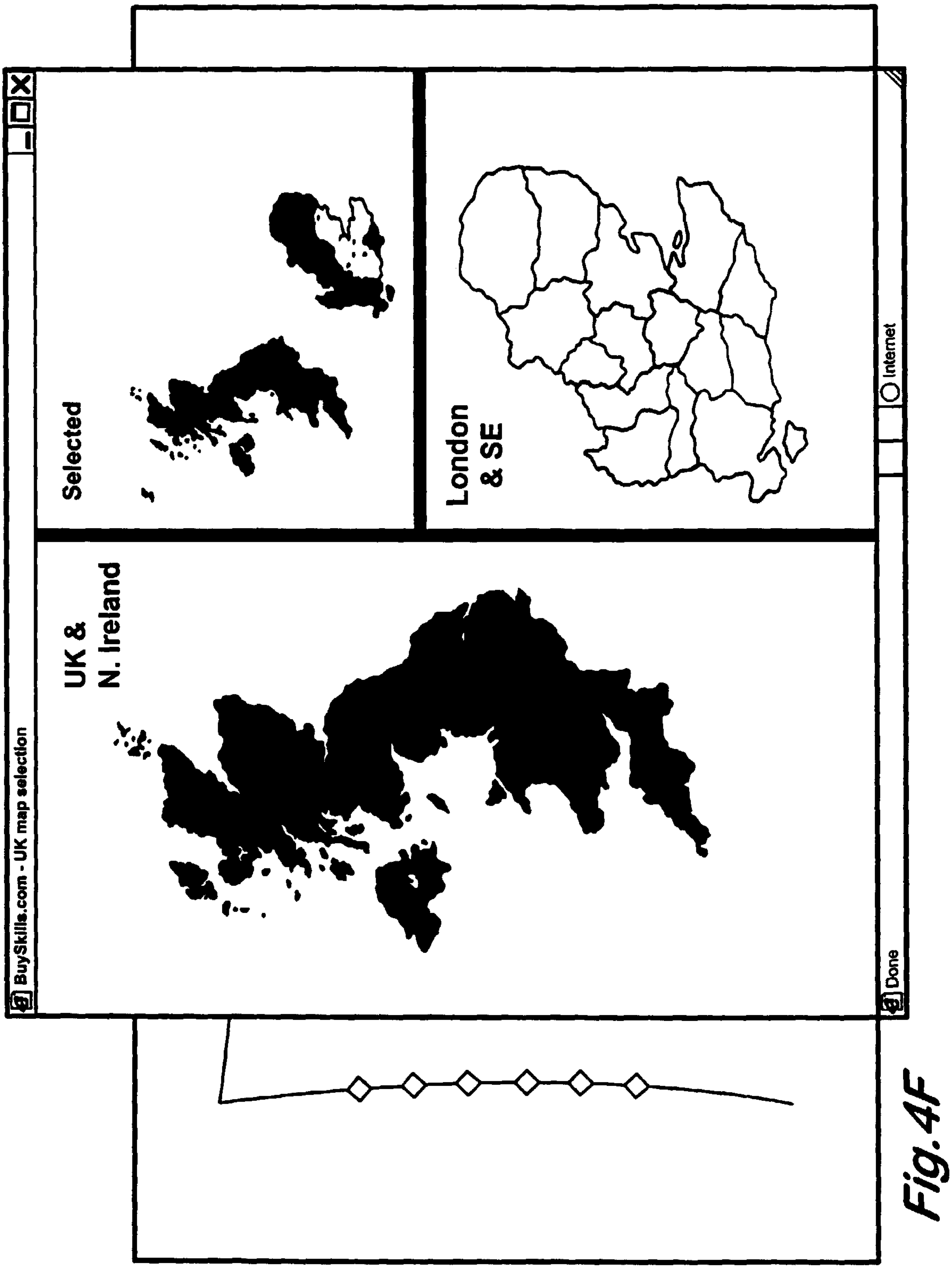
BuySkills.com - UK map selection
UK &
N. Ireland
Selected
London
& SE
Done
Internet

Fig.4F

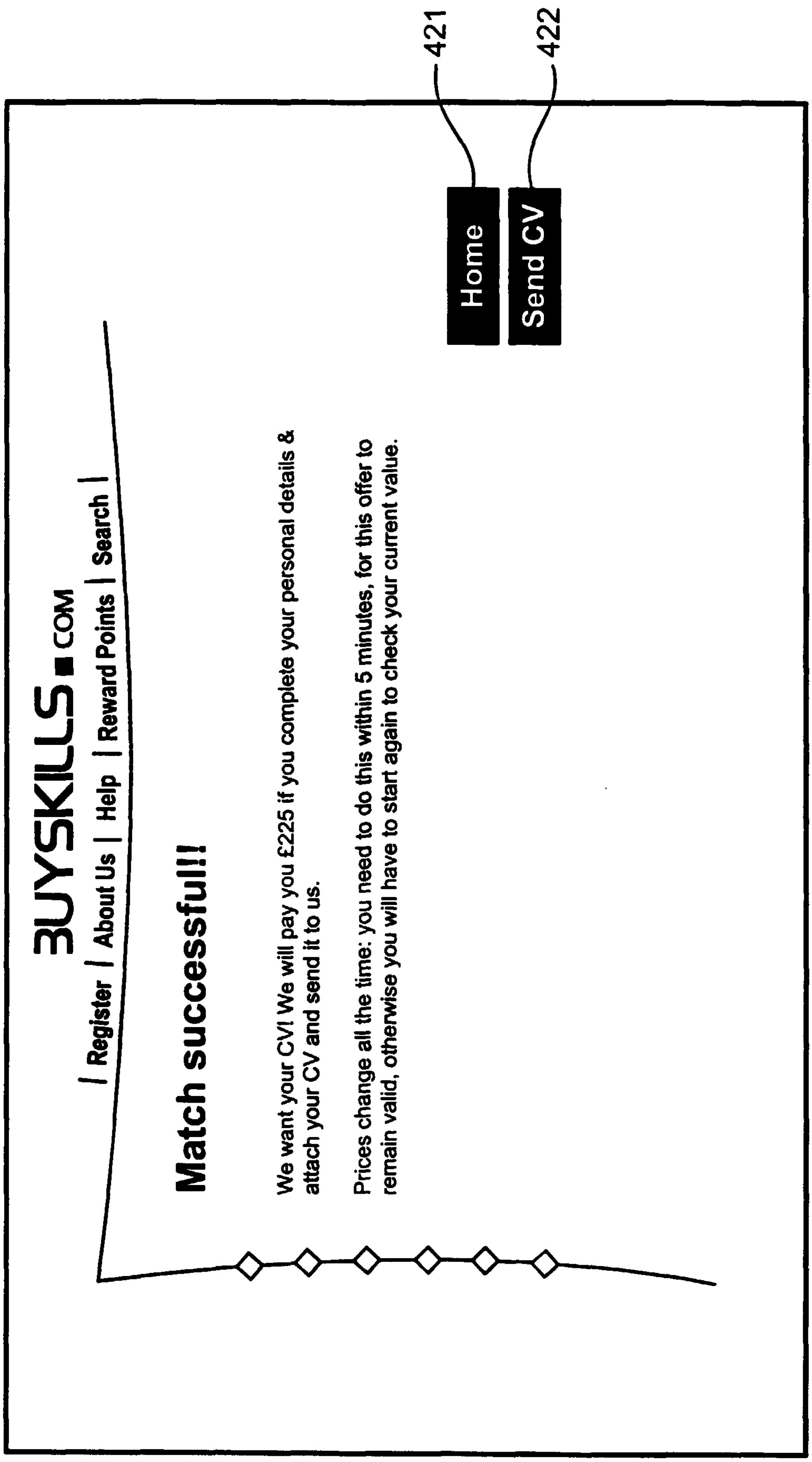
BUYSKILLS.COM
| Register | About Us | Help | Reward Points | Search |
Match successfull!
We want your CV! We will pay you £225 if you complete your personal details & attach your CV and send it to us.
Prices change all the time: you need to do this within 5 minutes, for this offer to remain valid, otherwise you will have to start again to check your current value.
Home
Send CV
421
422

*Fig.4G*

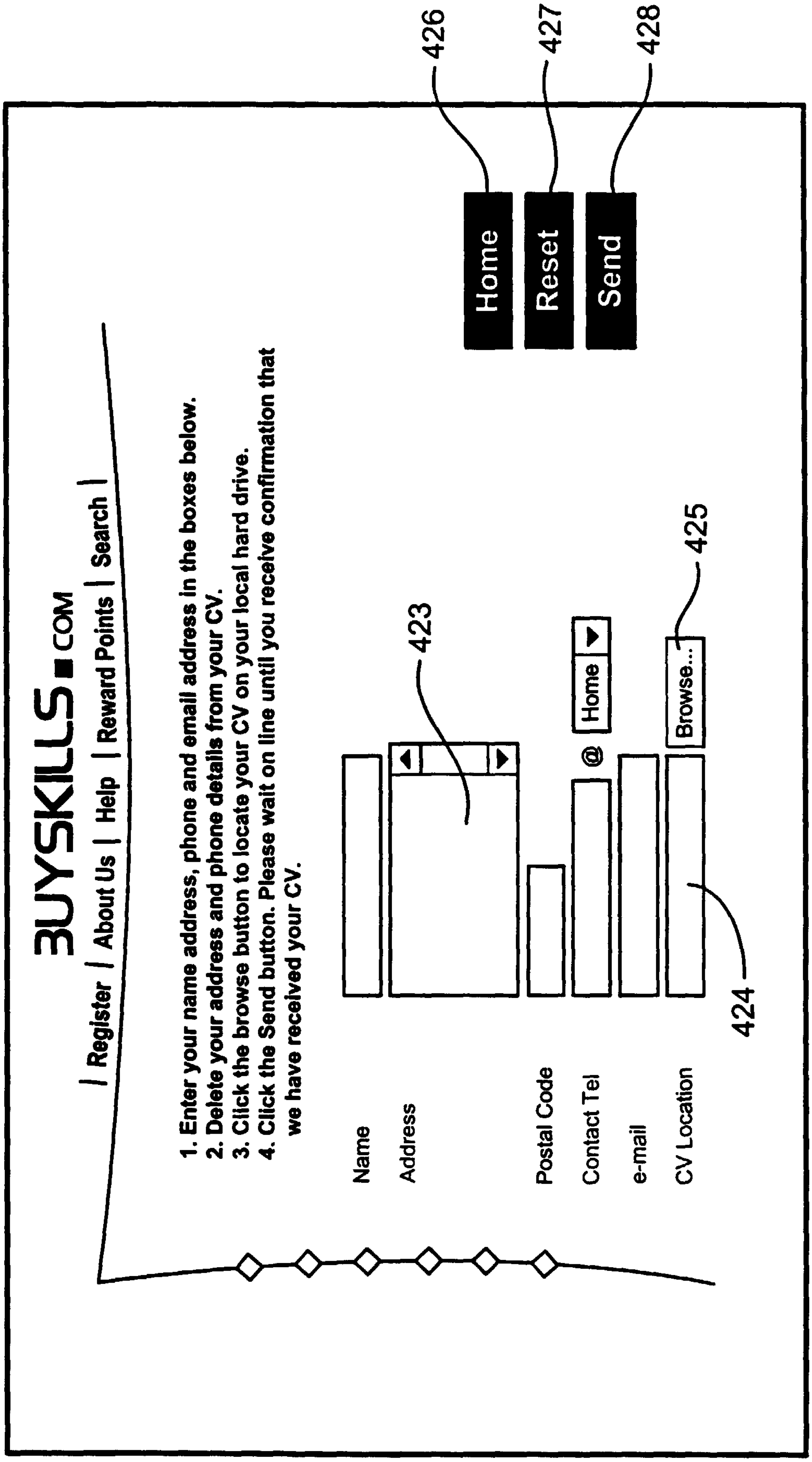
BUYSKILLS.COM
| Register | About Us | Help | Reward Points | Search |
1. Enter your name address, phone and email address in the boxes below.
2. Delete your address and phone details from your CV.
3. Click the browse button to locate your CV on your local hard drive.
4. Click the Send button. Please wait on line until you receive confirmation that we have received your CV.
Name
Address
Postal Code
Contact Tel
e-mail
CV Location
@
Home
Browse...
Home
Reset
Send
423
424
425
426
427
428

Fig.4H

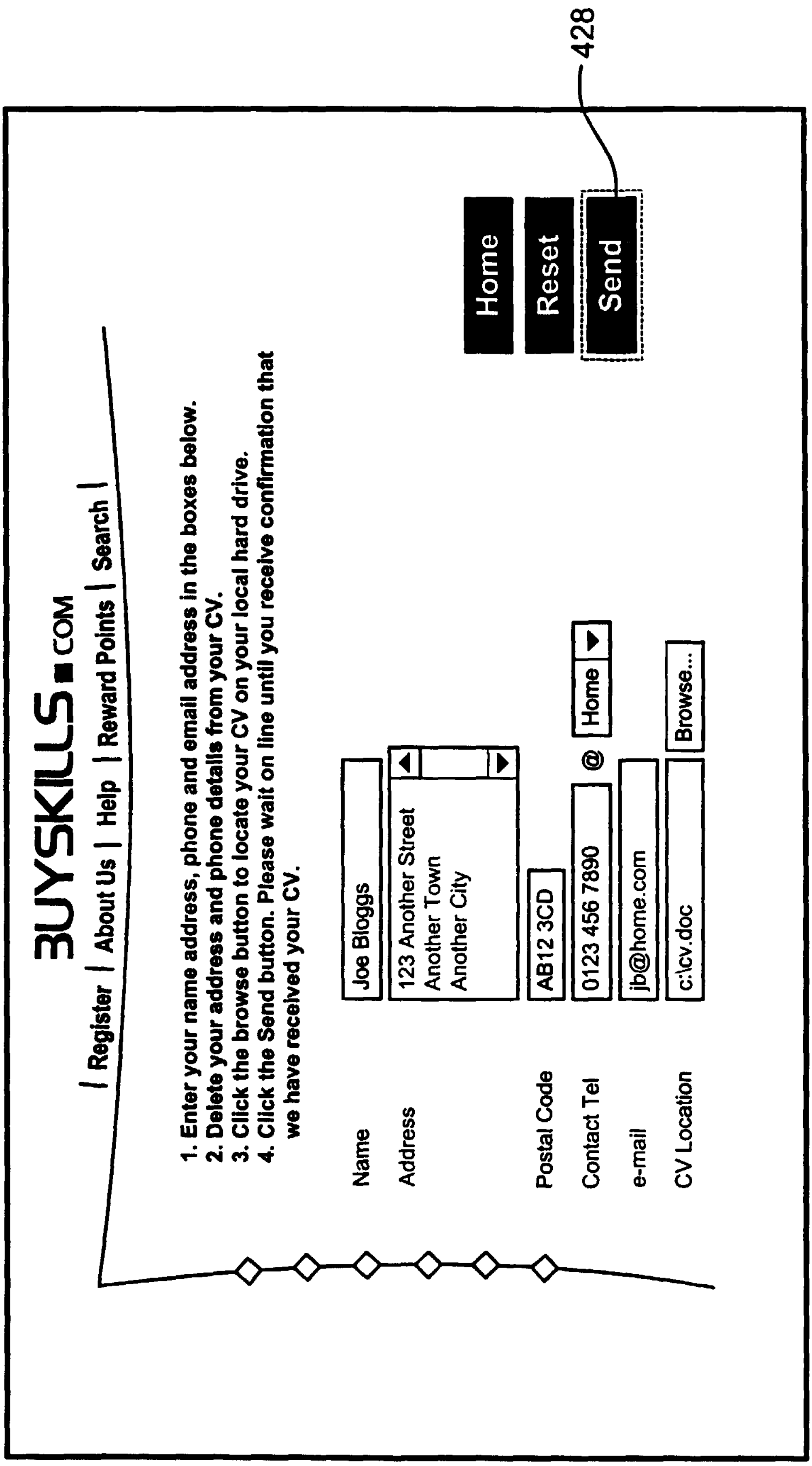

428
BUYSKILLS.COM
| Register | About Us | Help | Reward Points | Search |
1. Enter your name address, phone and email address in the boxes below.
2. Delete your address and phone details from your CV.
3. Click the browse button to locate your CV on your local hard drive.
4. Click the Send button. Please wait on line until you receive confirmation that we have received your CV.
Name
Joe Bloggs
Address
123 Another Street
Another Town
Another City
Postal Code
AB12 3CD
Contact Tel
0123 456 7890
@
Home
e-mail
jb@home.com
CV Location
c:\cv.doc
Browse...
Home
Reset
Send


Fig.4I

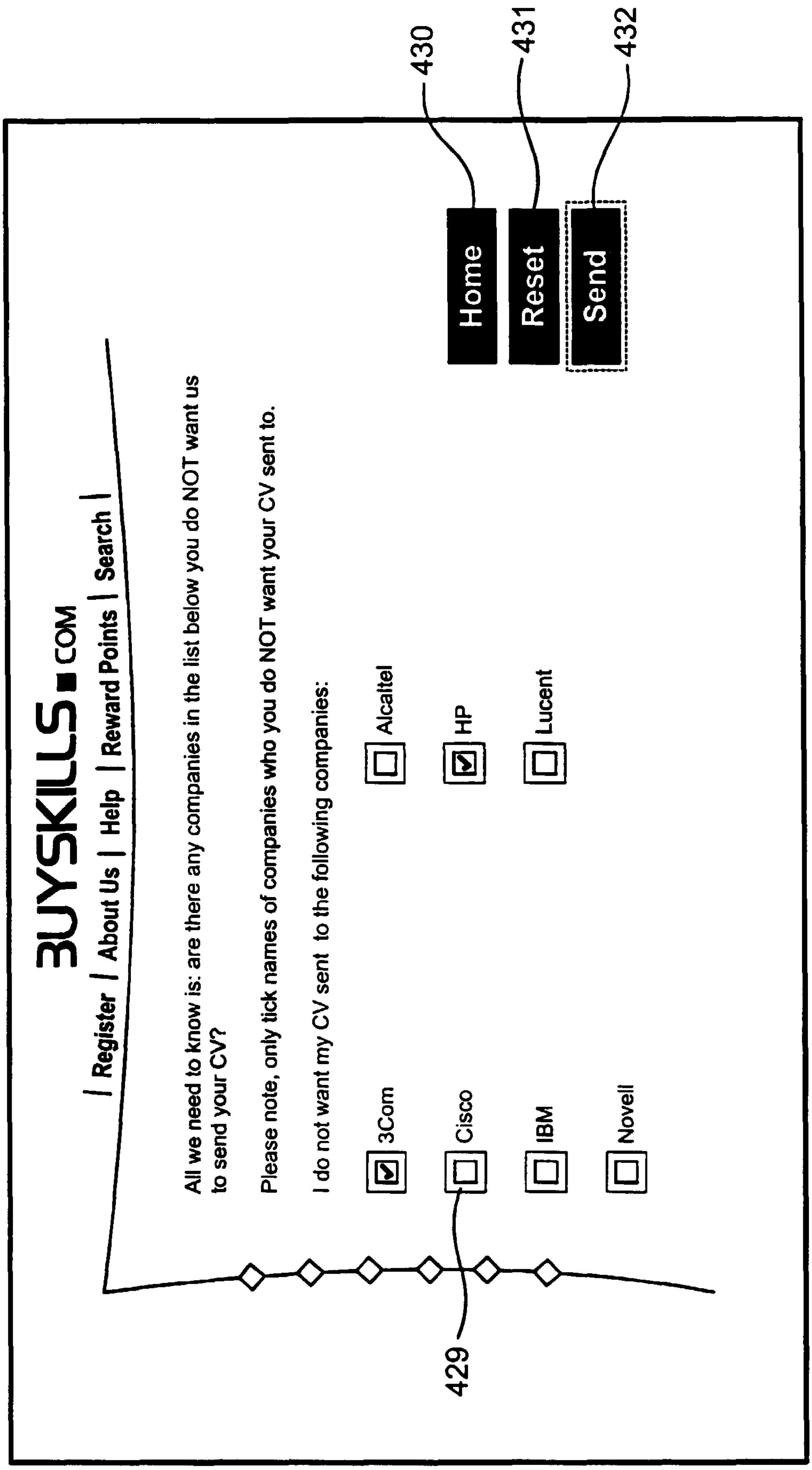
BUYSKILLS.COM
Register | About Us | Help | Reward Points | Search |
All we need to know is: are there any companies in the list below you do NOT want us to send your CV?
Please note, only tick names of companies who you do NOT want your CV sent to.
I do not want my CV sent to the following companies:
3Com
Alcaltel
Cisco
HP
IBM
Lucent
Novell
Home
Reset
Send
429
430
431
432

Fig.4 J

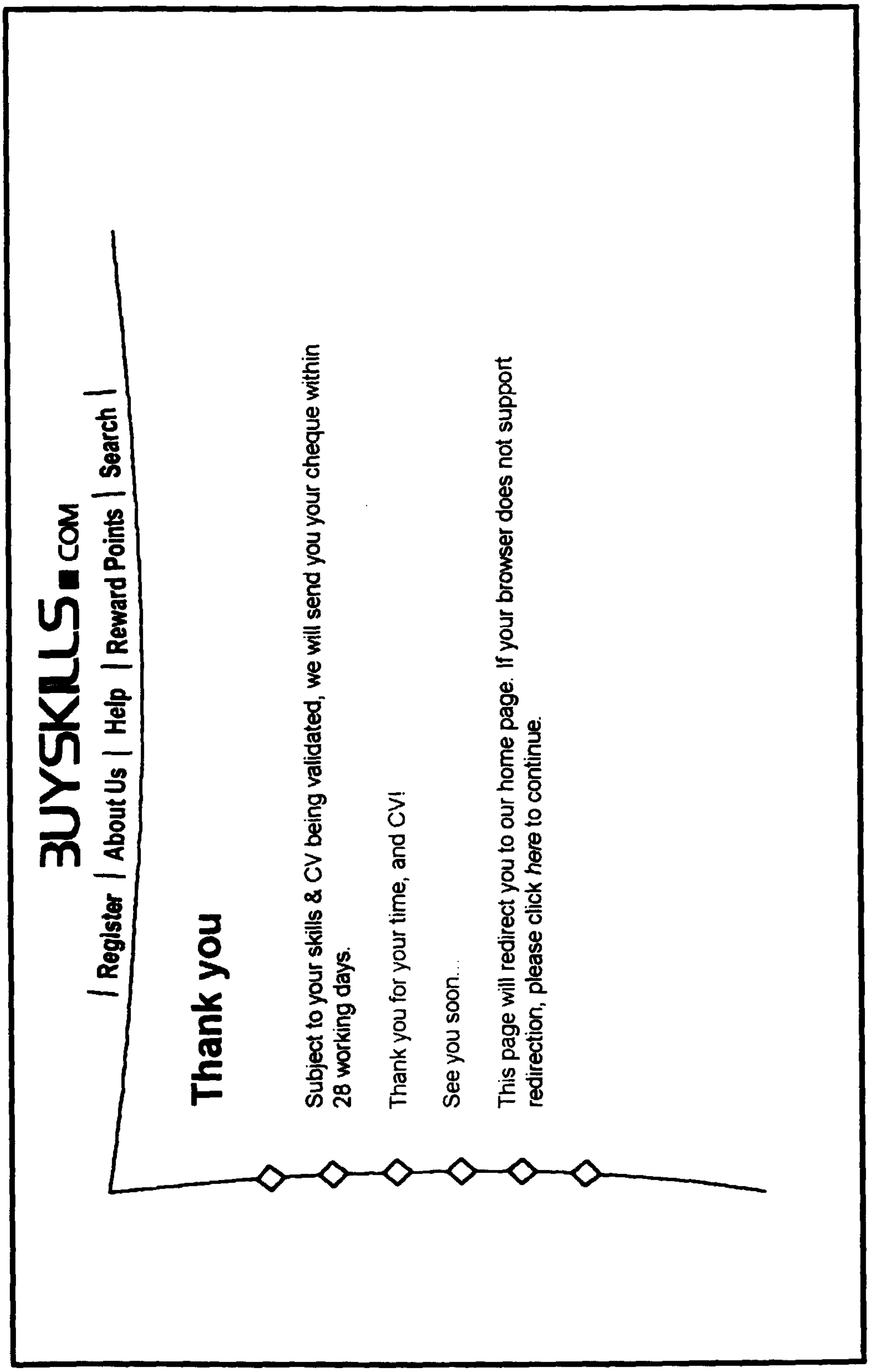
BUYSKILLS.COM
Register | About Us | Help | Reward Points | Search |
Thank you
Subject to your skills & CV being validated, we will send you your cheque within 28 working days.
Thank you for your time, and CV!
See you soon...
This page will redirect you to our home page. If your browser does not support redirection, please click *here* to continue.

Fig.4K

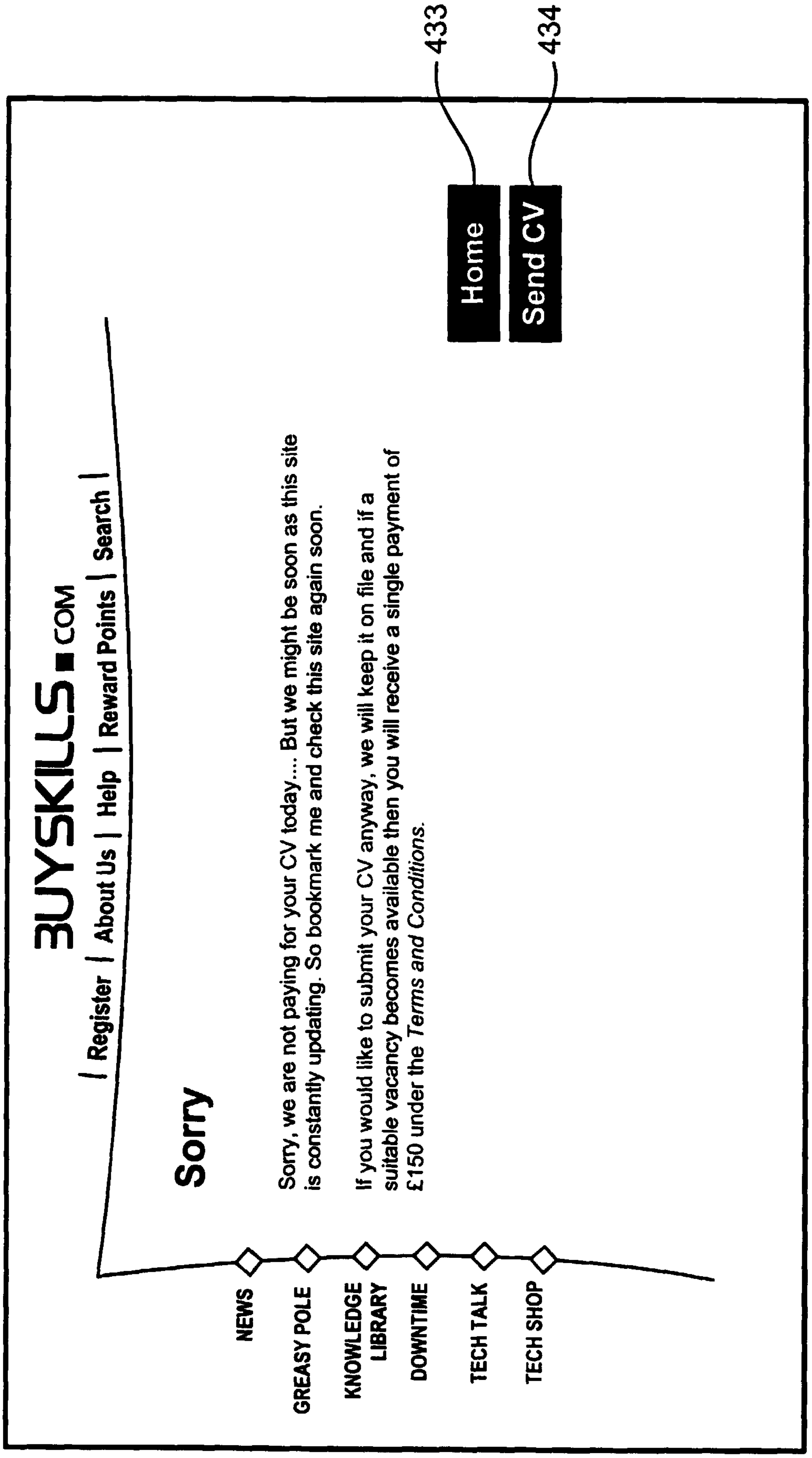
BUYSKILLS.COM
| Register | About Us | Help | Reward Points | Search |
Sorry
Sorry, we are not paying for your CV today.... But we might be soon as this site is constantly updating. So bookmark me and check this site again soon.
If you would like to submit your CV anyway, we will keep it on file and if a suitable vacancy becomes available then you will receive a single payment of £150 under the *Terms and Conditions*.
Home
Send CV
433
434
NEWS
GREASY POLE
KNOWLEDGE LIBRARY
DOWNTIME
TECH TALK
TECH SHOP

Fig.5A

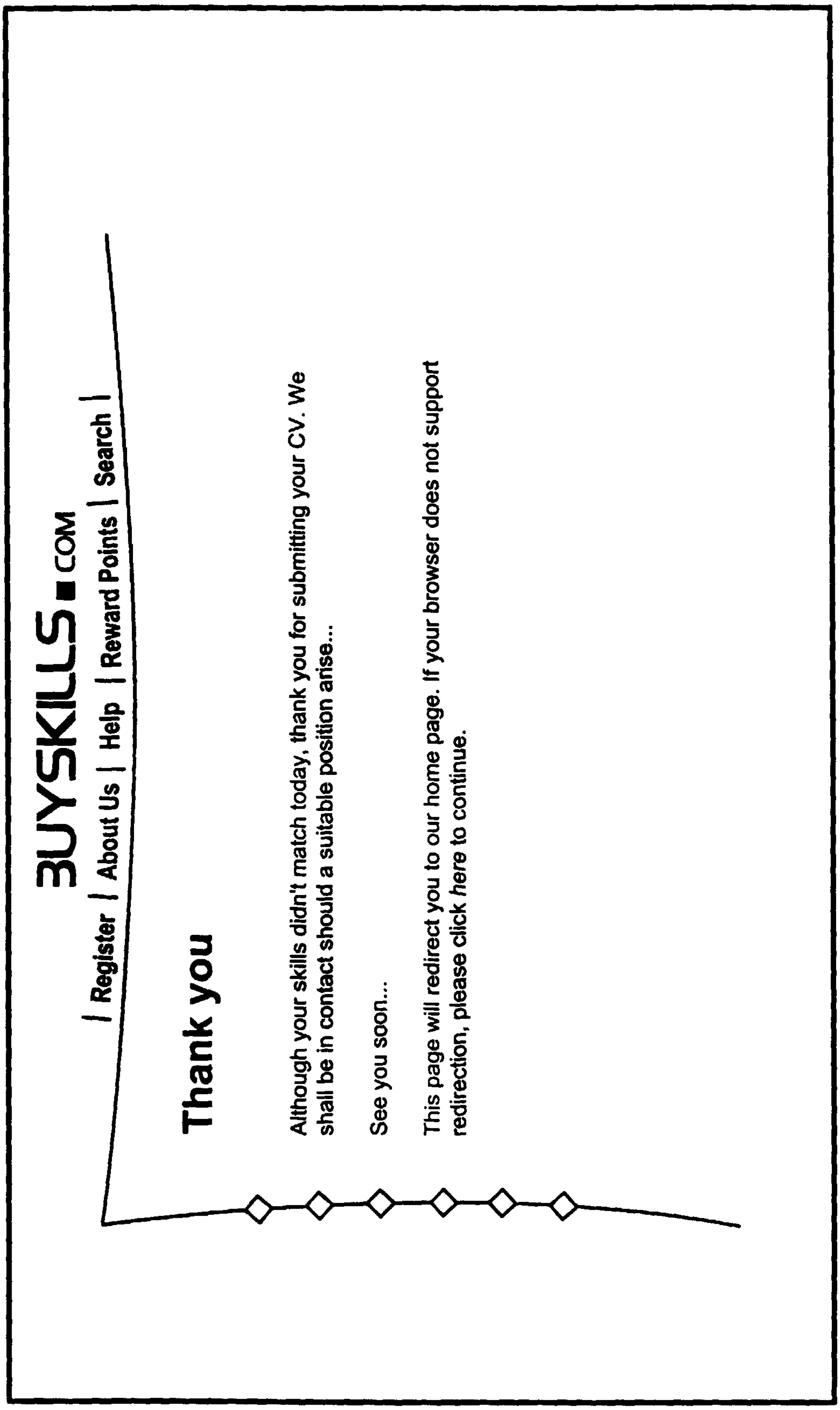
BUYSKILLS.COM
| Register | About Us | Help | Reward Points | Search |
Thank you
Although your skills didn't match today, thank you for submitting your CV. We shall be in contact should a suitable position arise...
See you soon...
This page will redirect you to our home page. If your browser does not support redirection, please click *here* to continue.

*Fig.5B*

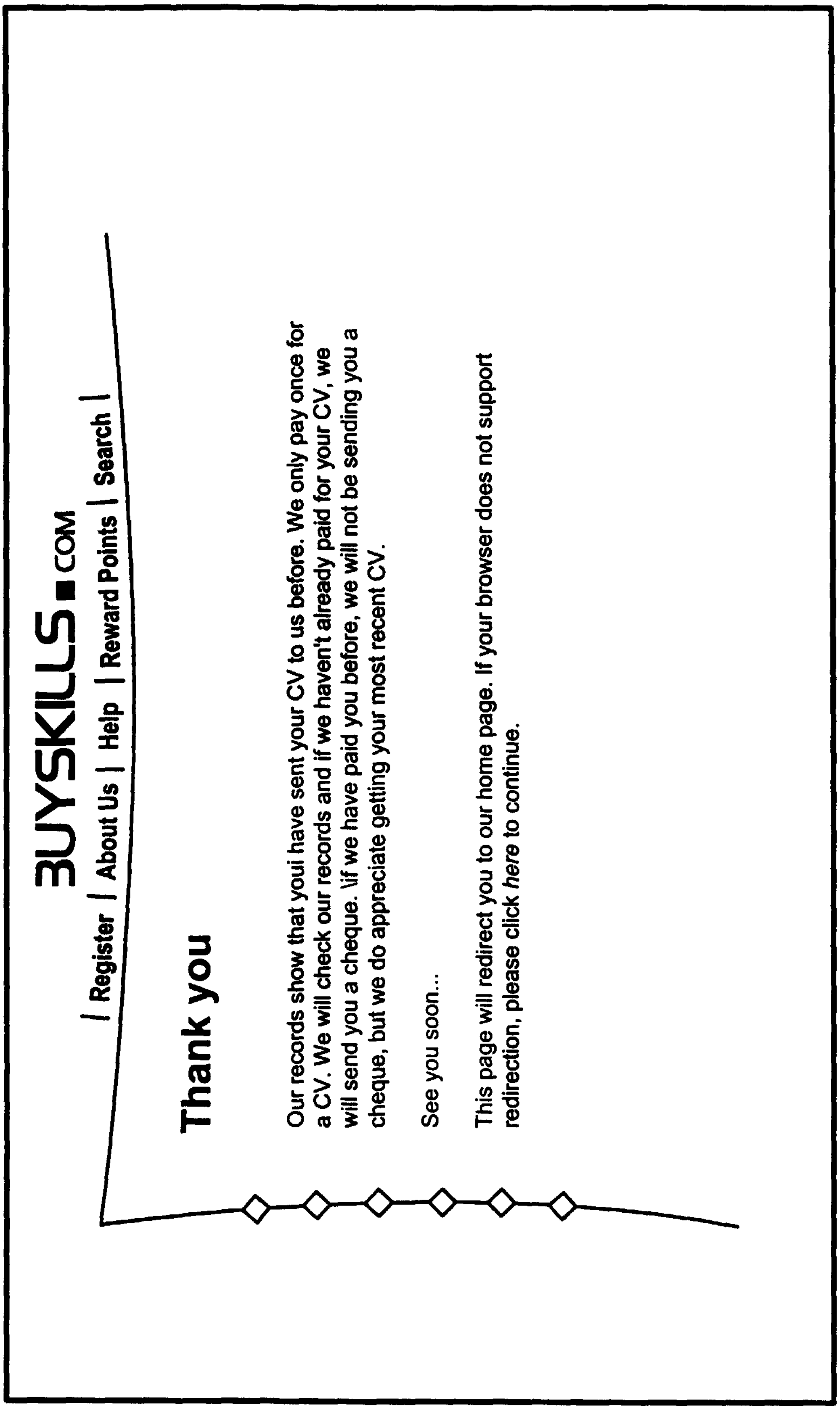
BUYSKILLS.COM
Register | About Us | Help | Reward Points | Search |
Thank you
Our records show that youi have sent your CV to us before. We only pay once for a CV. We will check our records and if we haven't already paid for your CV, we will send you a cheque. \if we have paid you before, we will not be sending you a cheque, but we do appreciate getting your most recent CV.
See you soon...
This page will redirect you to our home page. If your browser does not support redirection, please click here to continue.

*Fig.6*

European Patent Office

# EUROPEAN SEARCH REPORT

Application Number
EP 00 30 9370

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 17242 A (NETWORK RECRUITING INC) 8 April 1999 (1999-04-08)<br>* abstract; figures 1-5,7,8 *<br>* page 2, line 29 - page 5, last line *<br>* page 6, line 18 - page 16, line 19 * | 1-22 | G06F17/60 |
| Y<br><br><br>X | US 5 832 497 A (TAYLOR JEFFREY C) 3 November 1998 (1998-11-03)<br>* abstract; claims 1,2,7; figure 1 *<br>* column 1, line 49 - column 6, line 60 * | 1-4, 7-14, 18-22<br>15-17 | |
| Y | US 5 794 210 A (GOLDHABER A NATHANIEL ET AL) 11 August 1998 (1998-08-11)<br>* abstract; figures 1,11-13 *<br>* column 4, line 31 - column 6, line 31 *<br>* column 7, line 21 - column 8, line 61 * | 1-4, 7-14, 18-22 | |
| A | WO 98 39716 A (ELECTRONIC DATA SYST CORP) 11 September 1998 (1998-09-11)<br>* abstract; figures 1,2,5 *<br>* page 3, line 1 - page 5, last line * | 1,2,5,7, 8,10,12, 15-18, 20-22 | **TECHNICAL FIELDS SEARCHED (Int.Cl.7)**<br>G06F |
| A | "Jobs on the Web"<br>PC MAGAZINE, 'Online!<br>29 April 1999 (1999-04-29)<br>- 3 May 1999 (1999-05-03), XP002143061<br>Retrieved from the Internet:<br><URL:http://www.zdnet.com/pcmag/stories/reviews/0,6755,2249570,00.html><br>'retrieved on 2000-07-20!<br>see review of system Monster.com<br>-/-- | 1-22 | |

The present search report has been drawn up for all claims

| Place of search | Date of completion of the search | Examiner |
|---|---|---|
| THE HAGUE | 16 January 2001 | FERNANDEZ FERRE.., M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 00 30 9370

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 758 324 A (HARTMAN RICHARD L ET AL) 26 May 1998 (1998-05-26)<br>* abstract; figures 1,3,8-13 *<br>* column 3, line 15 - column 13, line 40 * | 1-22 | |
| A | US 5 197 004 A (SOBOTKA DAVID ET AL) 23 March 1993 (1993-03-23)<br>* abstract; figures 1,5-8 *<br>* column 1, line 16 - column 3, line 59 * | 1,8,10, 12,15, 18,20-22 | |
| A | US 5 164 897 A (CLARK NEIL M ET AL) 17 November 1992 (1992-11-17)<br>* abstract; figures 1,8,9 *<br>* column 2, line 1 - last line * | 1,8,10, 12,15, 18,20-22 | |
| P,A | US 5 978 768 A (MCGOVERN ROBERT J ET AL) 2 November 1999 (1999-11-02)<br>* abstract; figures 1,2,17,19-29 *<br>* column 3, line 54 - column 4, line 44 *<br>* column 13, line 40 - column 16, line 54 * | 1,8,10, 12,15, 18,20-22 | TECHNICAL FIELDS SEARCHED (Int.Cl.7) |

The present search report has been drawn up for all claims

| Place of search | Date of completion of the search | Examiner |
|---|---|---|
| THE HAGUE | 16 January 2001 | FERNANDEZ FERRE.., M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 30 9370

This annex lists the patent family membersrelating to the patent documents cited in the above-mentioned European search report.
The members are as contained in the European Patent Office EDP file on
The European Patent Office is in no way liable for these particulars which are merely given for the purpose of information.

16-01-2001

| Patent document cited in search report | Publication date | Patent family member(s) | Publication date |
|---|---|---|---|
| WO 9917242 A | 08-04-1999 | AU 9596498 A | 23-04-1999 |
| | | EP 1027671 A | 16-08-2000 |
| US 5832497 A | 03-11-1998 | NONE | |
| US 5794210 A | 11-08-1998 | AU 1415397 A | 03-07-1997 |
| | | CA 2240314 A | 19-06-1997 |
| | | EP 0934570 A | 11-08-1999 |
| | | JP 2000501868 T | 15-02-2000 |
| | | WO 9722074 A | 19-06-1997 |
| | | US 5855008 A | 29-12-1998 |
| WO 9839716 A | 11-09-1998 | AU 6182098 A | 22-09-1998 |
| US 5758324 A | 26-05-1998 | NONE | |
| US 5197004 A | 23-03-1993 | NONE | |
| US 5164897 A | 17-11-1992 | NONE | |
| US 5978768 A | 02-11-1999 | NONE | |

EPO FORM P0459

For more details about this annex : see Official Journal of the European Patent Office, No. 12/82